# FASCICULE DE BREVET EUROPEEN

(11) **EP 3 506 094 B1**
(45) Date de publication et mention de la délivrance du brevet: **02.10.2024**
(21) Numéro de dépôt: 18248142.4
(22) Date de dépôt: 28.12.2018
(51) Int. Cl.: G06F 9/48

(54) **PROCÉDÉ ET SYSTÈME POUR L'OPTIMISATION DE L'ORDONNANCEMENT DE TRAITEMENTS PAR LOT**
VERFAHREN UND SYSTEM ZUR OPTIMISIERUNG DER PLANUNG VON BATCHPROZESSEN
SYSTEM AND METHOD TO OPTIMIZE THE SCHEDULING OF BATCH PROCESSES

(30) Priorité: 30.12.2017 FR 1763424
(43) Date de publication de la demande: 03.07.2019
(73) Titulaire: BULL SAS, 78340 Les Clayes-sous-Bois (FR)
(72) Inventeur: DEMEILLIEZ, Bruno, 38380 Saint Laurent du Pont (FR); ALVAREZ MARCOS, Jose Ignacio, 69220 Saint Jean d'Ardières (FR); ROCHETTE, Florent, 38170 Seyssinet Pariset (FR)
(74) Mandataire: Cabinet Camus Lebkiri

(56) Documents cités:
- EP-A1- 3 113 022
- WO-A2-2005/008389
- GB-A- 2 473 505
- US-A1- 2013 007 753
- US-A1- 2014 074 641
- US-A1- 2014 282 591
- XHAFA F ET AL: "Evaluation of Hybridization of GA and TS Algorithms for Independent Batch Scheduling in Computational Grids", P2P, PARALLEL, GRID, CLOUD AND INTERNET COMPUTING (3PGCIC), 2011 INTERNATIONAL CONFERENCE ON, IEEE, 26 October 2011 (2011-10-26), pages 148 - 155, XP032116288, ISBN: 978-1-4577-1448-1, DOI: 10.1109/3PGCIC.2011.31
- HUSSAIN HAMEED ET AL: "A survey on resource allocation in high performance distributed computing systems", PARALLEL COMPUTING, vol. 39, no. 11, 14 October 2013 (2013-10-14), pages 709 - 736, XP028779066, ISSN: 0167-8191, DOI: 10.1016/J.PARCO.2013.09.009
- AMIRI MARYAM ET AL: "Survey on prediction models of applications for resources provisioning in cloud", JOURNAL OF NETWORK AND COMPUTER APPLICATIONS, ACADEMIC PRESS, NEW YORK, NY, US, vol. 82, 18 January 2017 (2017-01-18), pages 93 - 113, XP029930260, ISSN: 1084-8045, DOI: 10.1016/J.JNCA.2017.01.016
- JIA ZHAO-HONG ET AL: "A meta-heuristic to minimize makespan for parallel batch machines with arbitrary job sizes", EUROPEAN JOURNAL OF OPERATIONAL RESEARCH, ELSEVIER, AMSTERDAM, NL, vol. 240, no. 3, 11 August 2014 (2014-08-11), pages 649 - 665, XP029070205, ISSN: 0377-2217, DOI: 10.1016/J.EJOR.2014.07.039

## Description

La présente invention concerne le domaine des traitements par lot et plus particulièrement de l'optimisation de leur ordonnancement. L'invention porte notamment sur un procédé de planification auto-adaptative de l'ordonnancement de traitements par lots et un dispositif apte à mettre en oeuvre ce procédé.

### [Art antérieur]

Les traitements par lot sont utilisés pour l'automatisation de tâches non interactives qui doivent être exécutées de manière fiable dans certaines échéances. Un traitement par lots peut par exemple être utilisé pour mettre à jour les informations à la fin de la journée, transformer des données, générer des rapports, imprimer des documents ou réaliser d'autres tâches non interactives. Un traitement par lot peut aussi être utilisé pour effectuer diverses opérations avec fichiers, notamment des images numériques, telles que le redimensionnement ou la conversion. Les traitements par lot sont généralement mis en attente ou accumulés pendant les heures de pics lorsque les ressources informatiques ne sont pas disponibles ou limitées par les activités en temps réel. Ils sont alors exécutés en dehors des heures de pointe lorsque les ressources informatiques sont disponibles. Il est ainsi très fréquent que, pour des raisons techniques, ces traitements soient planifiés la nuit, les fins de semaine ou durant des périodes de faible activité métier.

En général, les traitements par lots sont réalisés régulièrement (par exemple tous les jours ou toutes les semaines) et l'ordre de priorité d'exécution des traitements par lots (i.e. l'ordonnancement) est géré par un programmateur de traitement par lots. Cet ordonnancement des traitements par lots permet d'éviter les problèmes d'accès concurrents à des données, de respecter des règles de précédences (la sortie d'un « batch » -terme anglais- est utilisée en entrée d'un autre) ou pour lisser la charge applicative de façon à ce que les traitements soient terminés dans la fenêtre de temps allouée. Cependant, bien que l'évolution des volumes de données soit sensiblement à la hausse, la fluctuation importante de ces volumes dans le temps entraine des consommations de ressources et des temps de traitements très volatiles. Par exemple, un même ordonnancement sur une même infrastructure peut entrainer un jour une surcharge des ressources et une interruption de traitement alors qu'un autre jour, à quelques jours d'intervalles, aucun dysfonctionnement ne sera décelé. Ainsi, bien qu'une partie des traitements par lots soit similaires de jours en jours, selon les jours, les volumes de données que certains traitements par lots ont à traiter peuvent varier fortement. De plus, on peut également assister à des tendances (« trend » en anglais) dans l'évolution de ces quantités de données à traiter. Toutes ces évolutions ont un impact non seulement sur le temps d'exécution des traitements, mais également sur le niveau de ressources utilisé. En outre, cela peut être jusqu'à plusieurs milliers de lot qui doivent être traités chaque jour de façon à intégrer les données ou transaction de la journée dans le processus métier d'une entreprise.

L'interrelation entre les différents lots (e.g. certains lots nécessiteront les données générées par d'autres lots avant d'être exécutés), la fluctuation des ressources à traiter ainsi que la contrainte en termes de temps et de ressources disponibles entraînent la nécessité de planifier de façon optimale et dynamique l'enchainement de ces lots. En outre, dans le cas d'erreurs ou de retards imprévisibles, il est nécessaire de disposer de processus permettant de résoudre ces problématiques de façon à ce que tous les lots soient finalisés dans le temps imparti. Il est aussi nécessaire de mettre en place une planification visant à optimiser l'exécution de ces traitements par lot de façon ce qu'ils soient terminés dans le temps imparti et qu'ils n'entrainent pas une saturation des ressources disponibles. En effet, dans certains cas, la production peut être arrêtée si les traitements n'ont pas pu se réaliser en temps voulu.

Il existe déjà des planificateurs de traitement par lots et notamment un mécanisme décrit dans le document EP3113022 consistant à utiliser les niveaux de consommation de ressources dans les règles d'ordonnancement des traitements par lot. Plus particulièrement, ce mécanisme se base sur les contraintes d'exécution des traitements par lot, les ressources qu'ils consomment et les ressources disponibles sur l'infrastructure. Néanmoins, ces mécanismes d'ordonnancement ne sont pas en mesure de s'adapter automatiquement aux fluctuations de volumes de données à traiter de façon à éviter les temps d'attente et optimiser au maximum l'utilisations des ressources disponibles tout n'entrainant pas une saturation des ces ressources ce qui entraînerait une augmentation des temps de traitement ou une erreur dans l'exécution des traitements.

Ainsi, il existe un besoin pour de nouveaux procédés ou dispositifs pour la planification d'ordonnancement de traitement par lots capables de proposer une planification auto-adaptative de l'ordonnancement des traitements par lots.

Le brevet européen numéro EP 3 113 022 concerne l'optimisation de l'ordonnancement de traitement par lots.

Le document "Evaluation of Hybridization of GA and TS Algorithms for Independent Batch Scheduling in Computational Grids" concerne l'évaluation d l'hybridation de deux algorithmes GA (Algorithme génétique) et TS (Cherche Tabou) pour les plans d'ordonnancements indépendents dans des grilles de calculs.

### [Problème technique]

L'invention a donc pour but de remédier aux inconvénients de l'art antérieur. En particulier, l'invention a pour but de proposer un procédé de planification de l'ordonnancement de traitements par lots qui soit capable de s'adapter automatiquement à la charge (e.g. au volume de données à traiter) de façon à proposer un ordonnancement toujours optimisé malgré la variation des quantités de données à traiter ou des ressources disponibles, que ces variations soient ou non prévues initialement lors de la mise en oeuvre du procédé. L'invention a en outre pour but d'optimiser le temps d'exécution des traitements par lot tout en prévenant un allongement des temps de traitements.

L'invention a en outre pour but de proposer un dispositif de planification capable de mettre en oeuvre un procédé de planification d'ordonnancement des traitements par lots capable de s'adapter notamment à l'activité amont ayant générée les données à traiter.

### [Brève description de l'invention]

A cet effet, l'invention porte sur procédé de planification auto-adaptative de l'ordonnancement de traitements par lot, lesdits traitements par lots étant configurés pour traiter des données générées lors d'activités métier sur une infrastructure informatique de production, ledit procédé étant mis en oeuvre par un dispositif associé à un référentiel ressource apte à mémoriser les ressources disponibles pour les traitements par lots sur une infrastructure informatique de traitement et à un référentiel réglementaire apte à mémoriser des règles d'exécution des traitements par lots, ledit procédé comprenant :
- une étape de mesure, par des sondes, de paramètres, de préférence significatifs, d'activités métier sur l'infrastructure informatique de production,
- une étape de définition, par un module de calcul d'impact, d'un profil temporel pour chacun des traitements par lot en fonction des valeurs de paramètres, de préférence significatifs, d'activités métier mesurées et d'un modèle de comportement de traitement par lot, et
- une étape de conception, par un module de conception de plan d'ordonnancement, d'un plan d'ordonnancement optimisant les ressources à partir des profils temporels des traitements par lot et dans le respect des règles d'exécution mémorisées dans le référentiel règlementaire et des données de ressources mémorisées dans le référentiel ressources.

Le procédé selon l'invention permet d'optimiser l'ordonnancement des traitements par lot en tenant compte de l'activité sur l'infrastructure informatique de production des applications métiers, sources des données à traiter mais également en fonction du comportement des traitements par lot précédents. En effet, le module de conception permet, en association avec le module de calcul d'impact, de concevoir le plan d'ordonnancement le plus adapté à la situation notamment grâce à la prise en compte d'un modèle de comportement des traitements par lot. Cela permet de réduire le temps d'exécution car l'ordonnancement est particulièrement adapté aux volumes de données qu'il y a à traiter et cela tout en respectant les limites de consommation des ressources définies préalablement. Plus particulièrement, le procédé permet une optimisation de l'ordonnancement en tenant compte de l'activité métier et du comportement des traitements par lots ayant été observé lors de leurs précédentes exécutions. La présente invention peut donc se présenter comme un mécanisme permettant de modifier à la volée (fonctionnalité auto adaptative) le plan d'ordonnancement des traitements par lot afin d'optimiser le temps d'exécution, tout en respectant les limites de consommation des ressources (sans les saturer) définies préalablement.

**Selon d'autres caractéristiques optionnelles du procédé :**
- l'étape de définition d'un profil temporel comporte en outre la prise en compte de seuils d'utilisation maximum des ressources mémorisés dans le référentiel de ressources. En effet, si le profil temporel présente un dépassement d'un seuil d'utilisation maximum des ressources alors il faudra prévoir un allongement dans le temps des différentes phases du traitement par lot concernées. La saturation d'au moins une ressource entrainant un temps d'exécution plus long.
- l'étape de conception du plan d'ordonnancement comprend une modélisation de l'utilisation de chaque ressources durant une période de traitement afin de pouvoir déterminer la quantité de ressources disponibles pour les autres traitements durant ladite période. Cela est un moyen de paralléliser les autres traitements au mieux d'agencer des traitements par lot en parallèle sans entrainer une saturation des ressources disponibles.
- il comprend une étape préalable de définition par un module de modélisation, d'un modèle de comportement comportant les sous étapes suivantes : i) chargement de valeurs de paramètres d'activités métier, de préférence mesurées sur l'infrastructure informatique de production lors de la génération des données à traiter, ii) chargement de valeurs de paramètres de comportement d'un traitement par lot, de préférence mesurées sur l'infrastructure informatique de traitement lors du traitement des données générées par des applications métiers, et iii) génération par un module de modélisation, d'un modèle de comportement des traitements par lot à partir des valeurs de paramètres d'activités métier et valeurs de paramètres de comportement. Le modèle comporte avantageusement au moins une corrélation entre une valeur de paramètres d'activités métier et une valeur de paramètre de comportement d'un traitement par lot.

- il comprend une étape préalable de définition d'un modèle d'auto-adaptation comportant les sous étapes de :
   ∘ chargement de valeurs de paramètre de comportement d'un premier traitement par lot lors du traitement des données générées par des applications métiers,
   ∘ chargement de valeurs de paramètres de comportement d'au moins un autre traitement par lot lors du traitement des données générées par des applications métiers,
   ∘ génération, par un module de modélisation, d'un modèle d'autoadaptation à partir des valeurs de paramètres de comportement chargés.

Ainsi, le modèle d'auto-adaptation comporte alors au moins une corrélation entre une valeur de paramètre de comportement d'un traitement par lot et une valeur de paramètre de comportement d'un autre traitement par lot. En outre, un modèle d'auto-adaptation selon l'invention peut permettre de déterminer ou de corriger le profil temporel d'un traitement par lot en fonction des valeurs de paramètres d'un autre traitement par lot.
- il comprend une étape d'enregistrement des plans d'ordonnancement optimisant les ressources dans un catalogue de plans d'ordonnancement et une étape de sélection d'un plan d'ordonnancement adapté. La génération de plusieurs ordonnancements permet de ne pas avoir à calculer à nouveau tous les jours de nouveaux ordonnancements optimisant l'utilisation des ressources ce qui serait consommateur de ressources et de temps. Dans le cadre du procédé selon l'invention, il est seulement nécessaire de sélectionner le plan le plus adapté au sein d'un catalogue de plans.
- il comprend une étape de mise en oeuvre du plan d'ordonnancement optimisé.
- il comporte une étape de mesure des paramètres de comportement des traitements par lot.
- il comporte une étape de génération d'un rapport de traitement lorsque l'ensemble des traitements par lots sont achevés et une étape d'utilisation du rapport pour modifier le modèle de comportement des traitements par lot. Cela permet, au cours du temps, d'affiner les modèles de comportement.
- il comprend une étape de détection d'une déviation dans l'exécution des traitements par lot. Cette étape peut permettre d'identifier par exemple un allongement du temps de traitement ou une évolution du profil temporel de consommation des ressources par rapport aux profils temporels générés. Ainsi, suite à une telle détection de déviation, il est possible de modifier l'ordonnancement de façon à utiliser au mieux l'ensemble des ressources disponibles et d'éviter des dépassements de temps limite de traitements. Ainsi, la présente invention permet, outre la définition de mécanismes de prédiction du comportement de traitement par lot à partir de l'activité en amont, de pouvoir adapter le plan d'ordonnancement en fonction des résultats d'analyses des traitements par lot en cours d'exécution.
- l'étape de détection d'une déviation, comporte une mesure d'un paramètre de comportement d'un traitement par lot à un instant t, et une comparaison de la valeur du paramètre de comportement mesuré à une valeur du paramètre de comportement attendue, la présence d'un écart étant indicatrice d'une déviation.
- en cas de détection d'une déviation pour un ou plusieurs traitements par lot, ledit procédé comporte en outre une étape de génération d'un modèle de comportement affiné, d'un profil temporel affiné, et/ou d'un plan d'ordonnancement affiné. En effet, une fois une déviation observée, le procédé selon l'invention peut utiliser les valeurs de paramètres de comportement de traitement par lot mesurées pour modifier un modèle de comportement, un profil temporel et finalement le plan d'ordonnancement. Cela est avantageusement fait tout en vérifiant que l'ensemble des règles d'exécution est respecté et que les consommations de ressources sont bien au niveau attendu.
- la conception de plan d'ordonnancement optimisé concerne seulement une partie des traitements par lot devant être exécutés sur une période pour traiter les données générées lors des activités métier.
- il comporte une étape de conception d'un plan d'ordonnancement postérieur, pour une nouvelle période, en fonction d'un modèle d'auto-adaptation et à partir des profils temporels des traitements par lot, de valeurs mesurées de comportement de traitement par lot pendant une période antérieure et dans le respect des règles d'exécution mémorisées dans le référentiel règlementaire et des données de ressources mémorisées dans le référentiel ressource. Le plan d'ordonnancement postérieur concerne les traitements par lot devant être exécutés sur celle nouvelle période.
- il comprend en outre une étape de mémorisation des valeurs mesurées de paramètres de comportement des traitements par lot et de mise à jours des modèles de comportement de traitement par lot et des modèles d'auto-adaptation. Ces étapes permettent par exemple la mise en oeuvre de procédés d'apprentissage permettant d'améliorer les modèles au fil du temps.

L'invention porte en outre sur un dispositif de planification auto-adaptative de l'ordonnancement de traitements par lots de données générées par des activités métier sur une infrastructure informatique de production, ledit dispositif étant associé à un référentiel ressource apte à mémoriser des données de ressources disponibles pour les traitements par lots, à un référentiel réglementaire apte à mémoriser des règles d'exécution des traitements par lots, et à des sondes, configurées pour mesurer une valeur de paramètre d'activités métier sur l'infrastructure informatique de production par les applications métiers, ledit dispositif comprenant :
- un module de calcul d'impact, apte à définir un profil temporel pour chacun des traitement par lot en fonction des valeurs mesurées de paramètre d'activité métier et d'un modèle de comportement de traitement par lot, et
- un module de conception de plan d'ordonnancement, apte à concevoir un plan d'ordonnancement optimisant l'utilisation des ressources à partir des profils temporels de chacun des traitements par lot et dans le respect des règles d'exécution mémorisées dans le référentiel règlementaire et des données de ressources mémorisées dans le référentiel ressources.

D'autres avantages et caractéristiques de l'invention apparaitront à la lecture de la description suivante donnée à titre d'exemple illustratif et non limitatif, en référence aux Figures annexées qui représentent :
- Figures 1A et 1B, respectivement un calendrier de la consommation en ressource de deux traitement par lots sur les mois de janvier (J) et février (F) et un profil temporel d'un traitement par lot présentant la consommation en ressources dans le temps ;
- Figure 2, une représentation schématique d'un procédé de planification auto-adaptative de l'ordonnancement de traitements par lots selon l'invention. Les étapes encadrées par des pointillés sont facultatives ;
- Figure 3, une représentation schématique d'une étape de génération d'un modèle de comportement d'un traitement par lot selon l'invention.
- Figure 4, une représentation schématique d'une étape de génération d'un modèle de d'auto-adaptation selon l'invention.
- Figure 5, une représentation schématique de la construction des plans d'ordonnancement optimisant l'utilisation des ressources selon l'invention ;
- Figure 6, une représentation schématique d'un procédé de conception et d'exécution d'un plan d'ordonnancement optimisant l'utilisation des ressources selon un mode de réalisation de l'invention ;
- Figure 7, une représentation schématique d'un procédé d'auto-adaptation en temps réel d'un plan d'ordonnancement optimisant l'utilisation des ressources selon un mode de réalisation de l'invention ;
- Figures 8A, 8B et 8C, trois représentations schématiques de deux traitements par lot s'exécutant en parallèle, avec une représentation correspondant à un plan d'ordonnancement optimisant l'utilisation des ressources (4A), une représentation correspondant à un plan d'ordonnancement observé (4B) et une représentation correspondant à un plan d'ordonnancement affiné (4C) ;
- Figure 9, une représentation schématique d'un mode de réalisation de l'étape d'acquisition d'une empreinte de chaque traitement par lots pour chaque machine impactée par le traitement par lots ;
- Figure 10, une vue schématique du dispositif de planification auto-adaptative de d'ordonnancement de traitements par lot selon un mode de réalisation de l'invention.

### [Description de l'invention]

Dans la suite de la description, une « activité métier » correspond à des applications métiers s'exécutant sur une infrastructure informatique de production. Cela inclut notamment tous traitements en amonts ayant pour objet de fournir les données qui seront ensuite traitées par les traitements par lot (activité transactionnelle, dépôt de fichier ou de message, etc...). Ainsi, l'expression « paramètre d'activités métier » correspond à des paramètres mesurables permettant de quantifier ces activités. Cela peut inclure des valeurs d'utilisation des ressources de l'infrastructure informatique de production par des applications métiers ou des valeurs de paramètres concernant les données générés par les applications métiers et qui devront être utilisé par les traitements par lots. Un paramètre significatif d'activité métier est un paramètre corrélé aux paramètres de comportement d'un traitement par lot, notamment au regard du modèle de comportement.

Au sens de l'invention, un « traitement par lot » (« batch processing » en terminologie anglo-saxonne) est un enchaînement automatique de plusieurs phases par l'intermédiaire d'une suite de commandes (processus) sur un ordinateur sans intervention d'un opérateur. Une fois qu'un processus est terminé l'ordinateur traite le lot suivant néanmoins à un instant T, il y a généralement plusieurs traitements par lots qui s'exécute en parallèle. Le traitement des lots se termine une fois que tous les lots de la pile (queue) ont été exécutés. Les traitements par lots sont surtout utilisés pour des tâches automatisées, notamment pour l'envoi automatique de courriers postaux ou électroniques. Un traitement par lot est généralement stocké dans un fichier de commandes qui est exécuté par le système informatique. L'exécution du fichier de commandes peut produire un certain nombre d'actions aussi diverses que la mise à jour de bases de données, l'envoi d'e-mails aux utilisateurs ou la production d'un ou de plusieurs fichiers de sortie à utiliser par un autre traitement par lots.

L'« ordonnancement » ou « plan d'exécution » au sens de l'invention correspond à l'ordre d'exécution des différents traitements par lots devant être réalisé au cours d'une période de temps donnée. Cet ordonnancement est généralement calculé en fonction de règles et/ou de prérequis de façon à satisfaire des exigences de disponibilité de ressources.

L'expression « paramètre de comportement d'un traitement par Iot » au sens de l'invention correspond à des paramètres de mise en oeuvre d'un traitement par lot ou à des conséquences de cette mise en oeuvre. Les paramètres de mise en oeuvre d'un traitement par lot peuvent par exemple comporter les paramètres sélectionnés parmi : l'utilisation de ressources par le traitement par lot dans le temps, le temps d'exécution du traitement par lot, ou encore son découpage en périodes avec des informations sur ces périodes (ordre, durée et les consommations en ressources associées). Avantageusement, le comportement d'un traitement par lot est analysé pour chacune des phases d'un traitement par lot. Les conséquences de la mise en oeuvre d'un traitement par lot peuvent par exemple inclure un volume de données générées ou une occupation de l'espace mémoire après la fin du traitement par lot. Ces valeurs peuvent par exemple être mesurées par des sondes.

Le terme « empreinte » au sens de l'invention correspond à un ensemble d'information sur la consommation en ressources d'un traitement par lot ou la disponibilité en ressources d'une machine (pour l'empreinte à vide) pendant sa période d'exécution.

On entend par « ressource », des paramètres, des capacités ou des fonctions de dispositifs informatiques permettant le fonctionnement d'un traitement par lot ou d'une application. Un même dispositif informatique est associé généralement à plusieurs ressources. De même, une même ressource peut être partagée entre plusieurs traitements par lot. Une ressource est généralement associée à un identifiant unique permettant de l'identifier au sein d'une infrastructure informatique. Par exemple, le terme « ressource » peut inclure : des disques réseaux caractérisés par exemple par leurs entrées/sorties, la lecture/écriture sur des disques, le taux d'utilisation de la mémoire, un réseau caractérisé par sa bande passante, un processeur caractérisé par exemple par son utilisation (en pourcent) ou le taux d'occupation de ses caches, une mémoire vive caractérisée par la quantité allouée. On entend par « utilisation des ressources », la consommation d'une ressource par un traitement par lot ou par une application métier.

Par « infrastructure informatique », on entend au sens de l'invention un ensemble de structures informatiques (i.e. dispositifs informatiques), ou machines, apte à faire fonctionner une ou plusieurs applications métiers ou chaines applicatives. La structure informatique peut être un serveur ou comporter une pluralité de machines. Elle est utilisée pour mettre en oeuvre (exécuter) l'ordonnancement des traitements par lots. Dans cette invention, l'infrastructure informatique de production désigne l'infrastructure informatique utilisée pour générer les données à traiter tandis que l'infrastructure informatique de traitement désigne l'infrastructure informatique utilisée pour exécuter les traitements par lot.

Par « sonde » ou « sonde informatique » ou « sonde de consommation », on entend au sens de l'invention un logiciel associé à un équipement qui permet d'effectuer, de gérer et faire remonter vers un équipement informatique des mesures destinées à informer entre autres de l'état de fonctionnement des ressources ou de la consommation de ressources.

Par « seuil prédéterminé d'utilisation maximum », on entend au sens de l'invention une valeur maximale de paramètre associé à chaque ressource permettant un bon fonctionnement de ladite ressource. Par exemple, cela correspond aux limites maximales acceptables de consommations de ressources pour une structure informatique hébergeant un ou plusieurs traitements par lots. Ces limites peuvent être réelles ou hypothétiques et correspondent généralement un niveau d'utilisation au-delà duquel des dysfonctionnements peuvent survenir et ayant pour conséquence une saturation de la ressource qui entraine une augmentation des temps de traitement voir une erreur d'exécution de ces traitements.

Le terme « dysfonctionnement » au sens de l'invention correspond à la survenue d'une saturation d'une ou plusieurs ressources sur la structure informatique hébergeant un traitement par lots.

L'expression « interface homme-machine » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

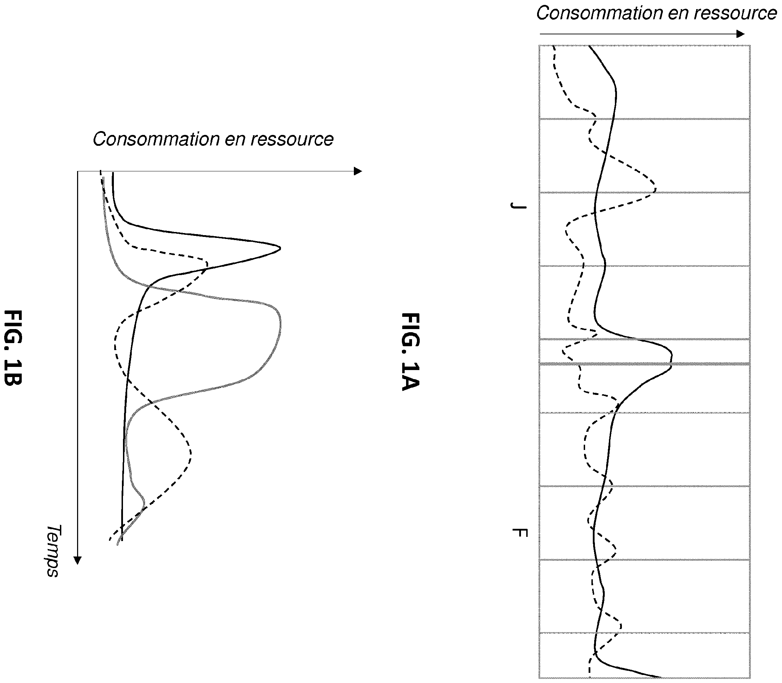

La Figure 1A illustre la consommation de ressources, ici le taux d'occupation du CPU, en fonction du temps (jours calendaire), par des processus de traitements par lot hébergés par une infrastructure informatique. Les consommations de deux traitements par lots sont représentées. Il est possible d'observer une variation de la consommation en ressources par ces deux traitements par lot en fonction du temps. Le premier traitement par lot représenté en ligne continue pourrait correspondre à un traitement par lots de données relatives aux fiches de paie. La consommation en ressource pour ce traitement par lot est plus forte durant les périodes de fin et de début de mois avec une certaine stabilité en cours de mois. Le second traitement par lots représenté en ligne pointillée pourrait correspondre à un traitement par lots de données relatives à la gestion de temps pour laquelle les instructions préconisent un traitement en fin de semaine avec une consolidation en fin de mois. Ainsi, la consommation en ressource est plus forte en fin de semaine avec une forte consommation en milieu de mois de janvier après le retour de vacances (J).

Cette figure illustre les variations auxquelles sont confrontés les outils de gestion de l'ordonnancement des traitements par lot. D'autres cas de figure existent où il peut être par exemple observé une certaine baisse d'activité le mercredi, ou une hausse d'activité suite aux fin de trimestres et semestres. Un seul plan d'exécution étalé sur l'année prenant en compte ces variations serait très statique et ne pourrait prendre en compte des changements dans le volume de données à traiter. Pourtant de tels changements peuvent être fréquents et il est nécessaire de pouvoir proposer une planification auto-adaptative, de préférence en temps réel, de l'ordonnancement des traitements par lot.

Ainsi, les inventeurs ont développé un **nouveau procédé planification auto-adaptative de l'ordonnancement de traitements par lot** pouvant être mis en oeuvre sur une infrastructure informatique comportant une ou plusieurs machines. Ce procédé permet avantageusement d'adapter dans le temps l'ordonnancement de traitements par lot.

Ce procédé selon l'invention peut être mis en oeuvre par un dispositif de planification auto-adaptative comportant ou étant associé à un référentiel ressource 11. Comme cela sera présenté par la suite, ce référentiel ressource 11 est apte à mémoriser les ressources disponibles pour les traitements par lots. C'est-à-dire les ressources disponibles de l'infrastructure informatique de traitement 4 mettant en oeuvre les traitements par lots. De même, le dispositif de planification auto-adaptative mettant en oeuvre le procédé selon l'invention comporte ou est associé à un référentiel réglementaire 12 apte à mémoriser des règles d'exécution des traitements par lots.

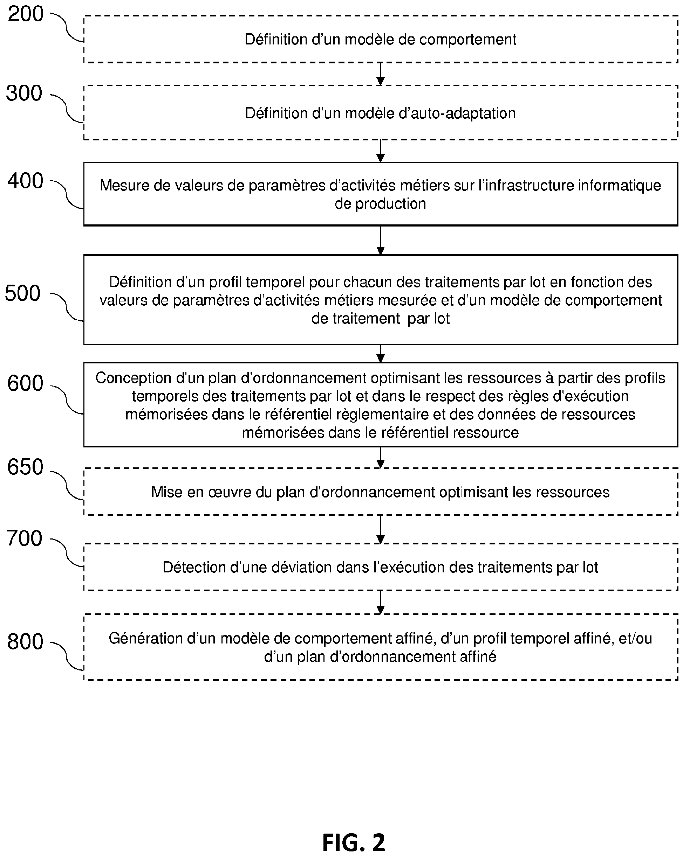

La **figure 2** illustre schématiquement un procédé de planification auto-adaptative de l'ordonnancement selon l'invention.

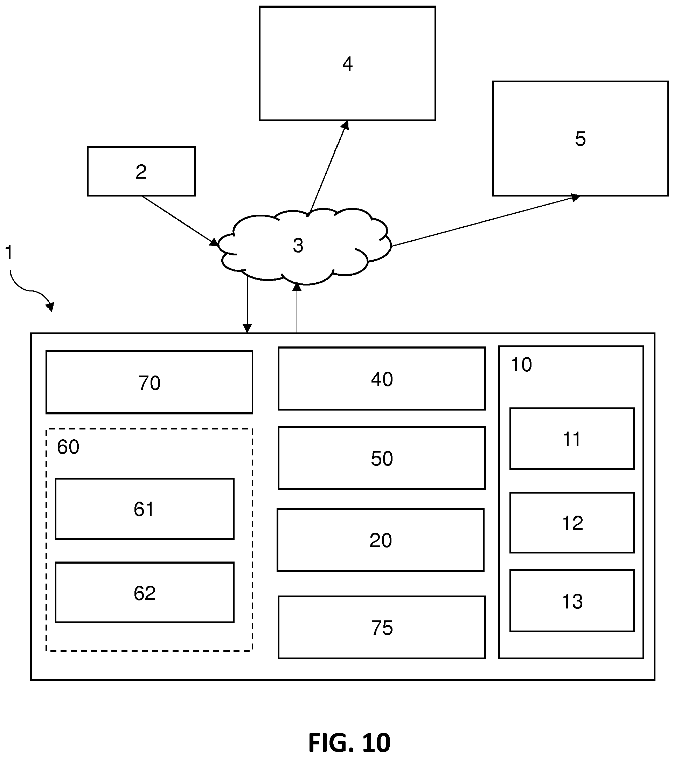

Comme cela est présenté dans **la** **figure 2**, le procédé de planification selon l'invention comprend une **étape 200 de génération d'un modèle de comportement.** Cette étape peut être réalisée partiellement ou complétement par **un module de modélisation 20** qui est représenté sur la figure 10.

Cette étape avantageuse porte notamment sur la surveillance et l'analyse du comportement des traitements par lot lors de leur exécution afin de déterminer par exemple le profil de consommation dans le temps des ressources de chaque traitement par lot et de déterminer les corrélations possibles entre les comportements des différents traitements et les valeurs de paramètres d'activités métiers participant à la génération des données à traiter. Il permet ainsi être établit une corrélation entre des paramètres mesurés d'activités métiers (tels que des ressources consommées ou des données produites) et le comportement ultérieur des traitements par lot lors notamment du traitement des données générées par les applications métiers. Ainsi, le comportement des traitements par lots, notamment en termes de consommation de ressources au cours des différentes phases des différents traitements et/ou de durée des traitements, est lié aux activités métiers et plus particulièrement au flux de données à traiter provenant des activités métier.

Le comportement d'un traitement par lot peut correspondre à des paramètres de mise en oeuvre d'un traitement par lot ou à des conséquences de cette mise en oeuvre. Des paramètres de comportement d'un traitement par lot peuvent par exemple comporter l'utilisation de ressources par les traitements par lot, leurs temps d'exécution, l'horaire de fin, la taille du ou des fichiers générés ou encore le volume de données traitée. L'objectif de cette sous-étape d'acquisition de valeurs d'un paramètre de mise en oeuvre d'un traitement par lot est, plus particulièrement, de pouvoir disposer d'un référentiel d'utilisations de ressources pour chaque traitement lors de son exécution comme cela est illustré à la figure 1B.

Le modèle de comportement se réfère au comportement d'un traitement par lot. Ainsi, le modèle de comportement est avantageusement issu d'une corrélation entre des valeurs de paramètres d'activités métier et des valeurs de paramètres de comportement de traitement par lot. L'étape de définition 200 d'un modèle de comportement des traitements par lot permet plus particulièrement la génération d'un référentiel de corrélations entre les différentes phases des différents traitements permettant d'extrapoler le temps et le niveau de ressources à partir des résultats de la surveillance réalisée en journée ou en temps réel.

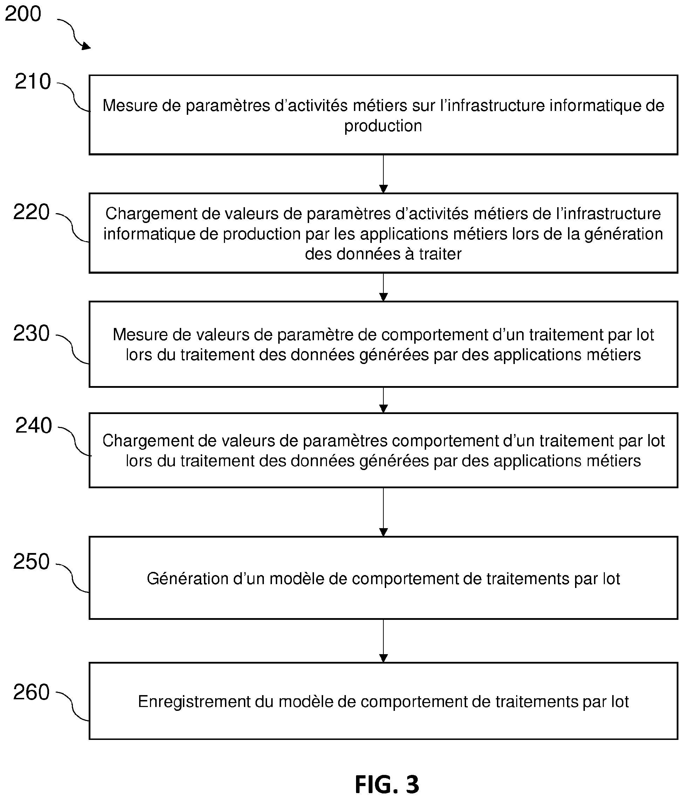

Comme cela est présenté à la **figure 3** et de façon préférée, l'étape de définition 200 d'un modèle de comportement comporte les sous étapes suivantes :
- Le chargement 220, i.e. le chargement en mémoire, par le module de modélisation 20, de valeurs de paramètres d'activités métiers. Ces valeurs peuvent par exemple être mesurées par des sondes et dans ce cas, l'étape peut également comprendre la mesure 210, par des sondes, des valeurs de paramètres d'activités métiers sur l'infrastructure informatique de production 5 (figure 10), par exemple lors de la génération des données à traiter.
- Le chargement 240, par le module de modélisation 20, de valeurs de paramètres de comportement d'un traitement par lot. Ces valeurs peuvent par exemple être mesurées par des sondes et dans ce cas, l'étape peut également comprendre la mesure 230, par des sondes, de valeurs de paramètre de comportement d'un traitement par lot lors du traitement des données générées par des applications métiers. Il faut comprendre ici que les données traitées par les traitements par lots lors de l'étape 230 de mesure sont les données générées par lors de l'étape 210.
- La génération 250, par le module de modélisation 20, d'un modèle de comportement des traitements par lot, ledit modèle comportant au moins une association entre une valeur de paramètre d'activité métier et une valeur de paramètre de comportement d'un traitement par lot. Ainsi, il peut avantageusement comporter plusieurs de ces associations de façon à mieux modéliser le comportement d'un traitement par lot.

L'étape de définition 200 d'un modèle de comportement peut également comporter une sous étape d'enregistrement 260 du modèle de comportement de traitements par lot.

De nombreux paramètres d'activités métier peuvent être mesurés lors de l'étape 210. Ceux sont par exemple des paramètres d'activités métier relatifs à des données traitées (e.g. nombre de fichiers ouverts par l'application, volume des données modifiées par l'application), des données générées (e.g. nombre de fichiers générés par l'application, nombre de messages envoyés, volume de données générées par l'application) ou encore d'utilisation de ressources (puissance de calcul consommée par l'application, flux de transfert de donnée dédié à l'application). De façon préférée, les paramètres d'activités métier comportent des paramètres sélectionnés parmi : volumes des échanges réseaux entre les applications métier, le nombre de fichiers transférés sur un serveur, l'utilisation moyenne du CPU sur un ou plusieurs des chaines applicatives métiers.

De la même façon, de nombreux paramètres de comportement d'un traitement par lot peuvent être pris en compte dans le cadre de l'invention. Ceux sont par exemple des paramètres de comportement relatifs aux différentes phases d'exécution du traitement : niveau de consommation de ressources, durée de la phase ou à l'exécution totale du traitement par lot. De façon préférée, les paramètres de comportement d'un traitement par lot comportent des paramètres sélectionnés parmi : une consommation de ressource en fonction du temps et une durée pour chacune des phases du traitement par lot.

En outre, l'étape de définition 200 d'un modèle de comportement peut comporter, préalablement à la génération 250 d'un modèle de comportement des traitements par lot, une sous étape de chargement des ressources significatives ou ressources clés qui auront un fort impact sur le comportement de chaque traitement par lot. Ces ressources significatives peuvent par exemple avoir été enregistrées dans un référentiel.

Ainsi, cette étape permet de générer un modèle de comportement permettant de lier des paramètres d'activités métier tels que l'utilisation des ressources de l'infrastructure informatique de production 5 par les applications métiers lors de la génération des données à traiter et des paramètres de comportement des traitements par lot, par exemple en termes de consommation de ressources, entre les différentes phases des différents traitements. De façon préférée, cette étape peut être répétée plusieurs fois par mois, de façon plus préférée plusieurs fois par semaines, de façon encore plus préférée chaque jour où des données à traiter sont générées. Cette surveillance quotidienne ou quasi-quotidienne permettra d'affiner les modélisations de comportement de façon à mieux déterminer le profil temporel de chaque traitement par lot. En outre, le modèle de comportement permet de générer des prévisions sur le comportement d'un traitement par lot en fonction des valeurs de paramètres d'activités métiers impactant ce traitement par lot. Ainsi, le modèle de comportement peut permettre de générer des prévisions sur de nombreux paramètres du traitement par lots tels que par exemple la consommation de ressources (CPU, I/O, mémoire...) ou encore sur le temps de réalisation estimé pour ce traitement par lot.

Le modèle de comportement des traitements par lot peut comporter un modèle de comportement pour chacun des traitements par lot ou bien consister en un seul modèle de comportement pour tous les traitements par lot. En outre, le modèle de comportement permet de prévoir le comportement d'un traitement par lot en fonction des valeurs de paramètres d'activités métiers notamment des valeurs de paramètres d'activités métiers des applications métiers impactant ce traitement par lot.

De façon préférée, l'étape préalable de définition d'un modèle de comportement comporte également une sous étape d'enregistrement du ou des modèles générés sur une mémoire de façon à créer un catalogue de modèle de comportement.

Avantageusement, comme cela sera détaillé par la suite, une surveillance par exemple quotidienne de ces valeurs permettra d'affiner ce ou ces modèles de comportement.

Comme cela a été discuté, le modèle de comportement permet de prévoir le comportement d'un traitement par lot en fonction des valeurs de paramètres d'activités métiers qui ont générée les données à traiter. Néanmoins, dans de l'exécution d'un plan d'ordonnancement, il est possible que des facteurs viennent influencer le comportement des traitements par lots sans que cela soit exclusivement lié aux données à traiter. Ainsi, les inventeurs proposent un modèle d'auto-adaptation qui peut être utilisé en complément de ce modèle de comportement,

Le modèle d'auto-adaptation se réfère à la détermination d'un comportement d'un traitement par lot mais sur la base d'une corrélation entre des valeurs de paramètres de comportement d'un premier traitement par lot et des valeurs de paramètres de comportement d'au moins un autre traitement par lot. Ainsi, ce modèle peut être utilisé en cours d'exécution d'un plan d'ordonnancement et permettre de s'adapter rapidement à des comportements observé lors de l'exécution d'une période antérieur du plan d'exécution.

L'étape de définition 300 d'un modèle d'auto-adaptation permet plus particulièrement d'extrapoler le temps et le niveau de ressources à partir des résultats de la surveillance réalisée sur une période précédente de l'exécution du plan d'ordonnancement.

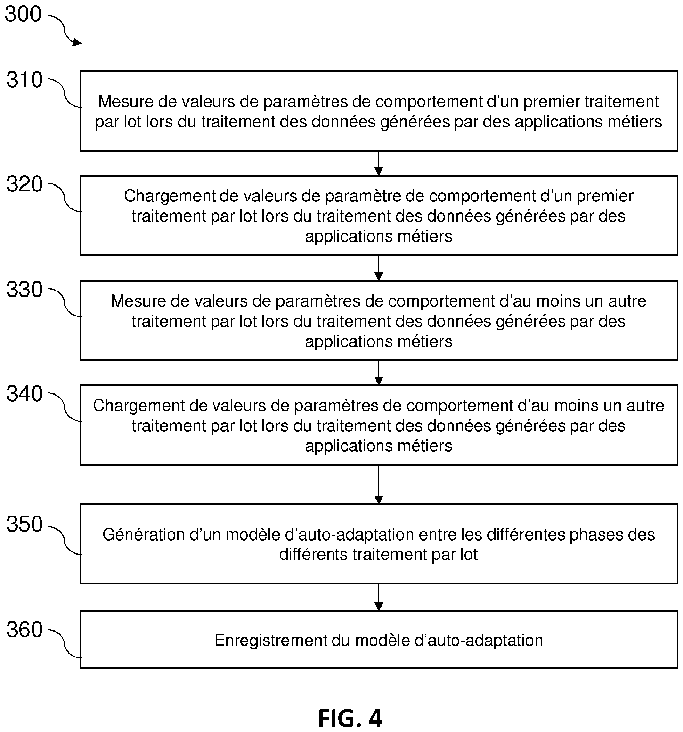

Comme cela est présenté à la **figure 4** et de façon préférée, l'étape de définition 300 **d'un modèle d'auto-adaptation** comporte les sous étapes suivantes :
- Le chargement 320, i.e. le chargement en mémoire, par le module de modélisation 20, de valeurs de paramètres de comportement d'un premier traitement par lot. Ces valeurs peuvent par exemple être mesurées par des sondes et dans ce cas, l'étape peut également comprendre la mesure 310, par des sondes, des valeurs de paramètres de comportement d'un premier traitement par lot sur l'infrastructure informatique de traitement 4 (figure 10).
- Le chargement 340, par le module de modélisation 20, de valeurs de paramètres de comportement d'au moins un autre traitement par lot. Ces valeurs peuvent par exemple être mesurées par des sondes et dans ce cas, l'étape peut également comprendre la mesure 330, par des sondes, de valeurs de paramètre de comportement d'au moins un traitement par lot sur l'infrastructure informatique de traitement 4 (lors du traitement des données générées par des applications métiers).
- La génération 350, par le module de modélisation 20, d'un modèle d'auto-adaptation entre les différentes phases des différents traitement par lot, ledit modèle comportant au moins une association entre une valeur de paramètre d'un premier traitement par lot et une valeur de paramètre de comportement d'un autre traitement par lot. Ainsi, il peut avantageusement comporter plusieurs de ces associations de façon à mieux modéliser le comportement d'un traitement par lot.

L'étape de définition 300 d'un modèle de comportement peut également comporter une sous étape d'enregistrement 360 du modèle de comportement de traitements par lot.

Comme cela est présenté dans **la** **figure 2**, le procédé de gestion selon l'invention comprend une **étape 400 de mesure de valeurs de paramètres d'activités métiers sur l'infrastructure informatique de production 5** (figure 10). Cette étape peut être réalisée par un ou plusieurs sondes qui seront présentées par la suite.

En effet, de façon à permettre une planification auto-adaptative de l'ordonnancement, il est avantageux de mesurer les valeurs d'un ou plusieurs paramètres d'activités métiers sur l'infrastructure informatique de production 5, notamment pour les activités métier (mettant en oeuvre par des applications métier) qui seront à l'origine des données d'entrée des traitements par lot à ordonnancer. Ainsi, de préférence, les applications métiers dont le ou les paramètres d'activités métiers (e.g. l'utilisation des ressources) sont mesurés sont les applications métiers qui généreront des données utilisées par la suite par les traitements par lot.

Comme lors de la définition du modèle de comportement, les nombreux paramètres d'activités métier peuvent être mesurés lors de l'étape 400. Ceux sont par exemple des paramètres d'activités métier relatifs à des données traitées (e.g. nombre de fichiers ouverts par l'application, volume des données modifiées par l'application), des données générées (e.g. nombre de fichiers générés par l'application, nombre de messages envoyés, volume de données générées par l'application) ou encore d'utilisation de ressources (puissance de calcul consommée par l'application, flux de transfert de donnée dédié à l'application). De façon préférée, les paramètres d'activités métier comportent des paramètres sélectionnés parmi : volume d'activité transactionnelle, volume de dépôt de fichier ou de message.

De façon plus préférée, les paramètres d'activités métier dont la valeur mesurée présente une corrélation avec : la quantité de données générées pour un traitement par lot et/ou le comportement d'au moins un traitement par lot. Autrement dit, lors de cette étape 400, les paramètres d'activités métier dont la valeur est mesurée comportent avantageusement au moins les paramètres dont la valeur est prise en compte dans le modèle de comportement.

Par exemple, le modèle de comportement des traitements par lot permet par exemple de calculer, à partir d'un nombre de fichier généré par une application métier, des valeurs d'utilisation des ressources de l'infrastructure informatique de traitement 4 telles que le CPU et mémoire en fonction du temps. Ainsi, le modèle de comportement permet de généré un profil temporel.

En outre, les valeurs mesurées peuvent faire l'objet d'un enregistrement dans un référentiel 13 d'activités métier.

Comme cela est présenté dans **la** **figure 2**, le procédé de gestion selon l'invention comprend une **étape 500** de **définition d'un profil temporel pour chacun des traitements par Iot.** Le profil temporel est avantageusement défini en fonction des valeurs mesurées de paramètres d'activités métier et d'un modèle de comportement des traitements par lot. Cette étape peut être réalisée par le module de calcul d'impact 50 sera présenté par la suite.

Cette étape de définition d'un profil temporel permet l'utilisation du « modèle des comportements » défini préalablement pour prédire le comportement de chaque traitement par lot. Le profil temporel d'un traitement par lot consiste donc en une prédiction du comportement du traitement par lots en fonction du temps et notamment en fonction de ses différentes phases. Un profil temporel typique pourra ressembler à la figure 1B.

Les profils temporel peuvent être très diverses en fonction des traitements par lot. Par exemple, certains traitement par lots comporteront l'exécution de tâches d'apprentissage qui tendent souvent à être plus consommatrices de ressources processeur tandis que d'autre intégreront des tâches contenant des requêtes d'agrégation de données qui tendent à être plus intensif en I/O. La connaissance préalable de la ressource dominante d'un traitement par lot peut être utilisée pour planifier un travail avec d'autres tâches pour une meilleure utilisation des ressources et moins d'interférences entre les tâches.

De façon préférée, les profils temporels ainsi générés sont enregistrés.

Le procédé de planification selon l'invention comporte également une **étape 600 de conception d'un plan d'ordonnancement optimisant l'utilisation des ressources à partir des profils temporels des traitements par Iot.** Cette étape peut être réalisée par **un module de conception de plan d'ordonnancement 60** (figure 10) qui sera présenté par la suite. Avantageusement, cette conception se fait dans le respect des règles d'exécution mémorisées dans le référentiel règlementaire 12 et des données de ressources mémorisées dans le référentiel ressources 13.

Une telle étape permet avantageusement d'optimiser le positionnement dans le temps des traitements par lot indépendamment d'une fréquence, mais en prenant en compte leurs contraintes d'exécution, les ressources qu'ils consomment et les ressources disponibles sur l'infrastructure qu'ils utilisent.

De façon préférée, l'étape 600 de **conception d'un plan d'ordonnancement optimisant l'utilisation des ressources**, s'effectue :
- à partir des profils temporels et de données enregistrées sur les référentiels ressources 11 et réglementaire 12,
- en déterminant le plan d'exécution optimum visant à réduire le temps global d'exécution tout en maximisant l'utilisation des ressources disponibles, et
- en déterminant, à partir des profils temporels, le niveau de ressource théoriquement utilisées lors de l'exécution de l'ensemble du plan d'exécution.

Avantageusement, l'étape 600 de conception d'un plan d'ordonnancement optimisant l'utilisation des ressources est mise en oeuvre de façon à concevoir un plan d'ordonnancement ne portant que sur une partie des traitements par lot à exécuter. Ainsi, le plan d'ordonnancement ne concerne par exemple que des traitements par lots urgents devant être réalisés en premier.

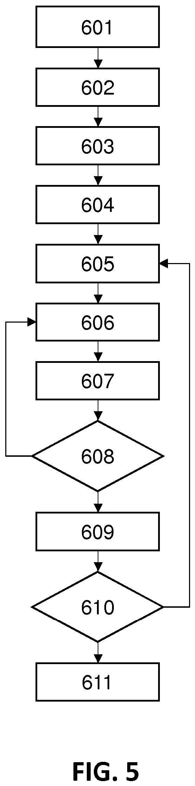

Un mode de réalisation de cette étape de conception est notamment illustré à la **Figure 5**. Dans cet exemple de construction d'ordonnancements de traitements par lots (plans d'exécution), un module de construction 60 de plans lance, sur une infrastructure informatique, des calculs matriciels entre les profils temporels de traitement par lot mémorisés et des données du référentiel ressources 11 mémorisées.

Lors d'une étape 601, les traitements par lot à considérer (dans le cas d'un plan d'ordonnancement partiel) sont sélectionnés. Lors d'une étape 602, l'ensemble des définitions de matrices possibles pour l'ensemble des traitements considérés sont construites. Celles-ci représentent les traitements par lot étalées sur l'ensemble des plages horaires.

Lors de l'étape 603 les définitions sont comparées avec le référentiel réglementaire et le module de construction de plan élimine, lors de l'étape 604, les définitions non compatibles.

Lors de l'étape 605, le module de construction 60 de plan sélectionne un premier traitement. Parmi les définitions de matrices restantes pour ce traitement, une définition est choisie de façon aléatoire lors d'une étape 606. Le module de construction de plan calcule ensuite la consommation dans le temps en ressources lors de l'étape 607.

Lors d'une étape 608, la consommation dans le temps en ressources est comparée aux données du référentiel ressources 11 afin de mesurer leur compatibilité avec l'infrastructure informatique de traitement 4 et plus particulièrement les ressources disponibles. Si c'est le cas, c'est-à-dire que les ressources sont suffisantes pour ladite définition, la définition choisie est mémorisée lors d'une étape 609. Sinon, une autre définition est présélectionnée de façon aléatoire parmi les définitions restantes et le module de construction de plan réitère les étapes 606, 607et 608.

Une fois la définition compatible d'un traitement mémorisée, l'étape 610 permet de déterminer si tous les traitements ont été planifiés. Si non, le module de construction de plan effectue les étapes 605, 606, 607, 608 et 609 tant que tous les traitements n'ont pas été planifiés.

A l'issue de l'étape 610, le module de construction de plan, dans une étape 611, génère le plan d'exécution, ou ordonnancement, et l'enregistre dans le catalogue de plans d'exécution. Ce plan d'exécution est le résultat des calculs matriciels entre les définitions mémorisées des traitements et les données de référentiel.

Chaque plan d'exécution, ou ordonnancement, peut comporter classiquement pour chaque traitement par lots le composant des informations sur la durée du traitement par lots, la consommation effectuée par le traitement sur chaque machine, l'ordre d'exécution du traitement, l'heure de démarrage du traitement, et l'heure de fin maximum du traitement.

Lors de la première mise en oeuvre d'un plan d'exécution, si la consommation de certaines ressources a dépassé la consommation en ressources attendue ou si certaines règles n'ont pas été respectées, alors le plan d'exécution peut être supprimé et un nouveau plan d'exécution peut être recalculé avec les empreintes mesurées. Cela permet de s'assurer que, lors de l'étape d'exécution, les règles d'exécution seront respectées et que les consommations de ressources seront au niveau de consommation attendu.

Alternativement, si la consommation de certaines ressources a dépassé la consommation en ressource attendue ou si certaines règles n'ont pas été respectées, mais que les dépassements restent faibles (par exemple inférieure à 10 % de dépassement) alors, le plan peut ne pas être supprimé. Ainsi, il y a un taux d'acceptabilité. Un traitement par lots devant durer 3h et durant 3h15 n'entrainera pas la suppression du plan d'exécution si les autres paramètres sont valides.

Le calcul d'un plan d'exécution optimisé est chronophage de même que l'adaptation des plans d'exécution existants. Ainsi, les plans d'ordonnancement optimisant l'utilisation des ressources conçus lors de l'étape 600 peuvent faire l'objet d'un enregistrement sur une mémoire, par exemple une mémoire du dispositif selon l'invention. Cela permet de générer un catalogue 61 de plans d'ordonnancement comportant une pluralité de plans d'ordonnancement de traitements par lot.

De préférence, le catalogue de plans d'exécution 61 contient entre 5 et 50 ordonnancements de traitements par lots, de façon plus préférée entre 10 et 40 et de façon encore plus préférée 10 et 20. En outre, ces plans d'ordonnancement sont de préférence enregistrés en association avec les valeurs de paramètres d'activités métiers mesurées et avec avantageusement les valeurs des règles d'exécution et les données de référentiel ressource.

Dans ce contexte, chaque plan d'ordonnancement enregistré pourra comporter une information relative aux valeurs de paramètres d'activités métiers utilisées pour calculer les profils temporels à l'origine du plan d'ordonnancement.

Ainsi, le procédé comporte aussi une **étape de sélection, dans ledit catalogue de plans d'exécution 61, d'un ordonnancement adapté de traitements par lots.** Cette étape peut être réalisée par un module de sélection 62.

Lors de cette étape de sélection, le procédé selon l'invention peut comparer des valeurs de paramètres d'activités métiers mesurées à l'étape 400 avec des valeurs de paramètres d'activités métiers enregistrées sur le catalogue de plans d'exécution 61 de façon à identifier un plan d'ordonnancement pouvant répondre aux besoins associés audites valeurs de paramètres d'activités métiers mesurées.

Une fois l'ordonnancement adapté de traitements par lots sélectionné, le procédé selon l'invention peut comporter une étape 652 de transmission du plan d'ordonnancement optimisant l'utilisation des ressources, à l'infrastructure informatique de traitement 4 pour son exécution 655 par un logiciel.

Les traitements par lots peuvent être mis en oeuvre sur une pluralité de machines d'une infrastructure informatique de traitement 4, l'infrastructure informatique de traitement 4 pouvant être ou non l'infrastructure informatique de production 5.

En outre, le procédé de planification auto-adaptative selon l'invention peut comprendre une **étape 660 de suivi et de mesure des paramètres d'exécution de l'ordonnancement des traitements par lots.** Cette étape permet de vérifier que, lors de l'exécution, les règles d'exécution ont été respectées, que les consommations de ressources ont bien été au niveau de consommation attendu et/ou que les volumes de données traitées correspondent aux volumes attendus. Cette étape 660 peut également comporter un suivi et un enregistrement des paramètres de comportement des traitements par lot.

Avantageusement, l'étape 660 de suivi et de mesure s'effectue en comparant un niveau de ressources utilisées mesuré à un niveau de ressources utilisées calculé précédemment pour tenir compte de l'incidence de l'exécution des traitements par lots en parallèle. En effet, il est possible que, de façon ponctuelle, il y ait des activités parasites sur l'infrastructure informatique entrainant une disponibilité plus faible des ressources avec par exemple une consommation de la bande passante ou des ressources mémoire sur des serveurs.

Le procédé peut ainsi comprendre une étape de mémorisation des valeurs de paramètres de comportement des traitements par lot et notamment des consommations en ressources lors de l'exécution de l'ordonnancement des traitements par lots.

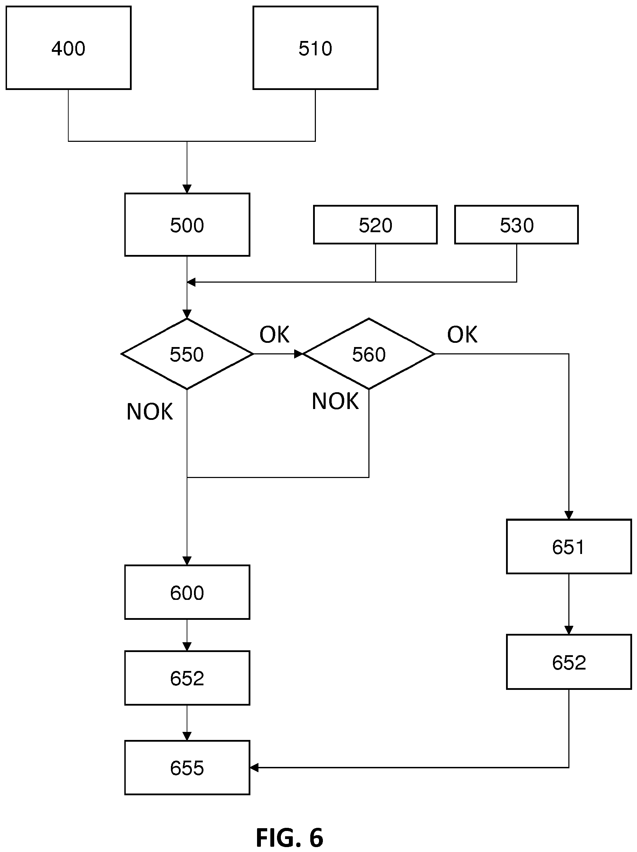

La **figure 6** présente un mode de réalisation selon l'invention. Selon ce mode de réalisation, le procédé comporte classiquement une étape 400 de mesure de valeurs de paramètres d'activités métiers sur l'infrastructure informatique de production et une étape 510 de chargement d'un modèle de comportement de traitement par lot préalablement généré. Suite à cela, le procédé comporte une étape 500 de définition d'un profil temporel pour chacun des traitements par lot en fonction des valeurs de paramètres d'activités métiers mesurée et du modèle de comportement chargé. Suite à l'étape 520 de chargement de données du référentiel ressource 11 et à l'étape 530 de chargement de données du référentiel règlementaire 12 et une fois les profils temporels générés, le procédé peut comprendre une étape 550 de recherche dans un catalogue de plan d'ordonnancement 61 d'un plan d'ordonnancement généré à partir de profils temporels identiques ou similaires. Si tel est le cas (OK), le procédé détermine 560 si le plan d'ordonnancement inscrit au catalogue répond aux exigences des données chargées de règles d'exécution et de ressources réglementaire et si tel est le cas (OK), le plan d'ordonnancement existant est chargé 651 et transmis 652 à une infrastructure informatique de traitement pour son exécution 655.

Si aucun plan est identifié (NOK) ou que le plan identifié ne répond pas aux exigences des données chargées de règles d'exécution et de ressources réglementaire, alors le procédé comporte une étape 600 de conception d'un plan d'ordonnancement optimisant l'utilisation des ressources à partir des profils temporels des traitements par lot et dans le respect des règles d'exécution mémorisées dans le référentiel règlementaire et des données de ressources mémorisées dans le référentiel ressource.

Le plan d'ordonnancement optimisant l'utilisation des ressources ainsi conçu est transmis 652 à une infrastructure informatique de traitement pour son exécution 655.

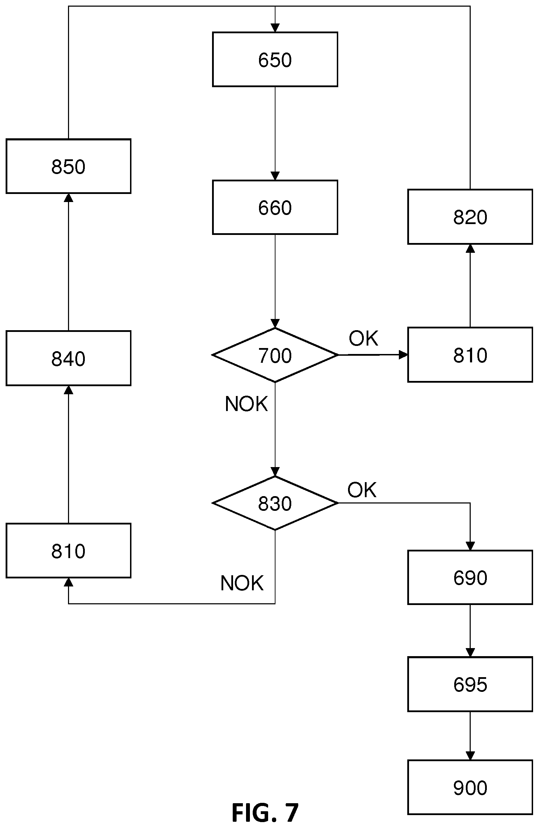

**La** **figure 7** présente un autre mode de réalisation selon l'invention correspondant aux étapes du procédé se déroulant lors de l'exécution des traitements par lot. Ainsi, ce mode de réalisation débute par une étape 650 de mise en oeuvre du plan d'ordonnancement optimisant l'utilisation des ressources.

Avantageusement, le procédé selon l'invention comporte une étape 660 de mesure, par exemple par des sondes 40, des valeurs de paramètres de comportement des traitements par lot. De façon préférée, cette mesure est réalisée en temps réel et est accompagnée d'un traitement rapide des résultats. En effet, l'analyse détaillée des paramètres de comportement des traitements par lot, par exemple de leur utilisation des ressources, en temps réel permet d'optimiser encore l'exécution des lots. Dans ce contexte, le procédé peut comprendre un enregistrement des valeurs de paramètres de comportement des traitements par lot. Comme déjà mentionné précédemment, les paramètres de comportement mesurés peuvent être très diverses et comportent par exemple les valeurs de consommation en ressource par le traitement par lot.

En particulier, la valeur mesurée de paramètres de comportement concerne un ou plusieurs paramètres de comportement critiques. Un paramètre de comportement critique peut être une ressource critique, à savoir une ressource jouant un rôle important dans la mise en oeuvre des traitements par lots. Par exemple, une ressource critique peut être une ressource dont le taux d'utilisation atteint des pourcentages supérieurs à 80 % lors de la mise en oeuvre des traitements par lots ou bien être une ressource pour laquelle l'infrastructure informatique ne dispose pas de redondance.

Les paramètres de comportement critiques peuvent varier en fonction des infrastructures informatiques et du temps. Ainsi, de façon préférée, dans le cadre de l'invention, un référentiel de paramètres de comportement critiques est généré. Ce référentiel de paramètres de comportement critiques permet notamment de catégoriser les paramètres de comportement et de les associer à un niveau de criticité. Ainsi, le procédé peut comporter une étape d'évaluation de la sévérité d'une déviation lors de laquelle les paramètres de comportement dont les valeurs présentent un écart sont comparées aux paramètres de comportement critiques, par exemple listés dans le référentiel paramètres de comportement critiques, de façon à identifier un niveau de sévérité élevé lorsque les paramètres de comportement dont l'écart est identifié sont également des paramètres de comportement critiques ou un niveau de sévérité faible lorsque les paramètres de comportement présentant un écart ne sont pas des paramètres de comportement critiques.

Outre un tel suivi, le procédé selon l'invention peut comporter, comme présenté en figure 7, une **étape 700 de détection d'une déviation dans l'exécution des traitements par lot.**

De façon préférée, l'étape de détection d'une déviation dans l'exécution des traitements par lot, comporte une mesure d'un paramètre de comportement d'un traitement par lot à un instant t, et une comparaison de la valeur du paramètre de comportement mesuré à une valeur du paramètre de comportement attendue, la présence d'un écart est indicatrice d'une déviation.

La valeur attendue du paramètre de comportement peut par exemple être sélectionnée parmi l'ensemble des règles d'exécution mémorisées, les valeurs de ressources disponibles mémorisées ou les profils temporels définis.

De façon préférée, les paramètres de comportement mesurés dans le cadre de la détection d'une déviation comportent des paramètres sélectionnés parmi : la durée d'une phase du traitement par lot, l'horaire de fin d'une phase du traitement par lot, la taille d'un fichier généré, la consommation des ressources lors du traitement par lots, le volume de données à traiter (par exemple via une surveillance des dépôts de fichier à traiter ou du volume de communication réseau mesurée en amont).

En particulier, la mesure d'un paramètre de comportement d'un traitement par lot peut concerner la consommation en ressource globale sur les machines composant l'infrastructure informatique. Alternativement, le procédé comporte une étape d'évaluation de la sévérité d'une déviation lors de laquelle les ressources dont la consommation est en augmentation sont comparées aux ressources critiques de façon à identifier un niveau de sévérité élevé lorsque les ressources dont la consommation est en augmentation sont également des ressources critiques. Ainsi, cela permet de juger alors au mieux de la sévérité de la déviation. La liste des ressources critiques peut par exemple être enregistrée dans un référentiel de ressources critiques.

Comme nous l'avons vu, le procédé selon l'invention est capable de prendre en compte les contraintes de performance de l'utilisateur en termes de cibles d'exécution et d'ordonnancer automatiquement les traitements par lots au regard des ressources pour atteindre ces cibles. Cela est facilité après avoir modélisé, *via* les profils temporels, le comportement attendu d'un traitement par lot en fonction des précédentes exécutions.

Néanmoins, comme nous allons le voir, le procédé selon l'invention peut également être utilisé pour adapter dynamiquement la répartition des traitements par lots. En, effet, il peut être souhaitable de générer un plan d'ordonnancement partiel ne comportant qu'une partie des traitement par lot à exécuter sur la période de temps puis en fonction du comportement des premiers traitements par lot exécutés, engager une étape de conception de plan d'ordonnancement pour les traitement par lot restant à programmer.

Comme présenté à la figure 7, si lors de l'étape 700 une déviation est détectée (OK), alors le procédé selon l'invention peut comprendre une **étape de chargement 810 d'un modèle d'auto-adaptation** puis une **étape de génération 820 d'un plan d'ordonnancement affiné.**

Cette étape 820 peut par exemple comprendre la conception d'un nouveau plan d'ordonnancent affiné pour les traitements par lots ordonnancés restant à exécuter. Cette nouvelle conception va avantageusement se baser sur les valeurs mesurées de paramètre de comportement des traitements par lot ayant été exécutés lors de l'étape 650 de mise en oeuvre en association avec le modèle d'auto-adaptation préalablement chargé.

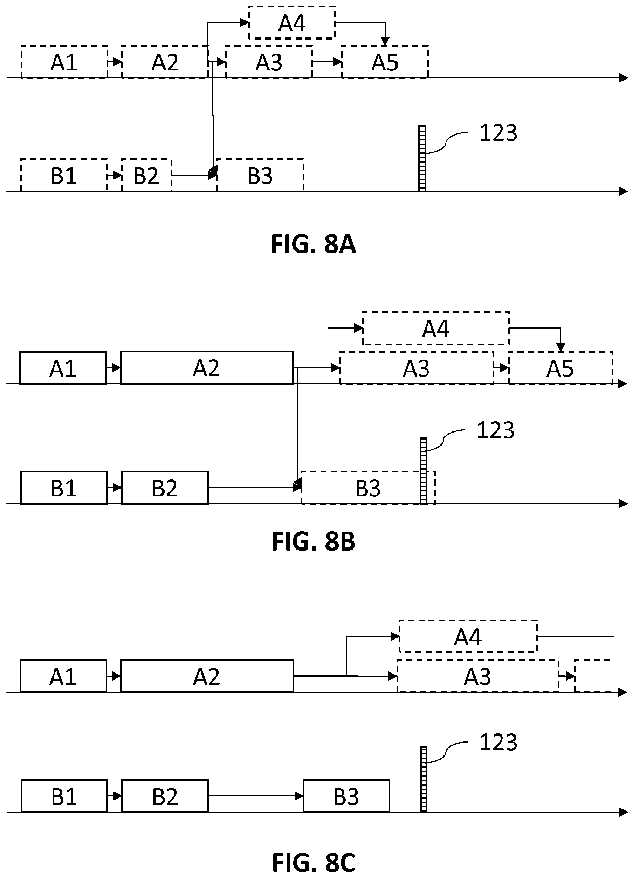

Par exemple, les figures 8A, 8B, 8C présentent des illustrations schématique d'un plan d'ordonnancent des traitements par lot (A & B) comportant chacun plusieurs phases (A1, A2, A3, B1...). Les phases en pointillées sont des estimations alors que les phases encadrées en trait continue sont les résultats des mesures réalisés. La figure 8A présente un plan d'ordonnancement optimisant l'utilisation des ressources tel que proposé lors de l'étape 600 du procédé selon l'invention. La figure 8B présente le déroulé observé du plan d'ordonnancement. Ainsi, grâce au suivi des valeurs de paramètre de comportement en cours d'exécution des traitements par lot il est possible d'identifier rapidement un ralentissement impactant notamment la phase A2 et engendrant un décalage et/ou un allongement des phases B3, A3, A4 et A5. Ainsi, il est possible de voir que la fin de la phase B3 va dépasser la limite 123 imposée dans les règles d'exécution enregistrées dans le référentiel d'exécution 12.

Grâce à une étape de génération 820 d'un plan d'ordonnancement affiné, le procédé selon l'invention est capable de modifier l'ordonnancement de phases déjà ordonnancées. Dans le cas d'espèce, les phases A3, A4 et A5 sont décalées dans le temps de façon à laisser la phase B3 utiliser l'ensemble des ressources de l'infrastructure informatique de traitement 4 et lui permet ainsi de se terminer avant l'échéance 123.

En outre, le procédé selon l'invention peut comprendre une modification du modèle de comportement, du modèle d'auto-adaptation ou des profils temporels. Néanmoins de façon préférée, les modèles ne sont pas modifiés au cours de l'exécution d'un traitement par lot car une modification directe des modèles nécessiterait des calculs intensifs de modélisation à un moment où il est important de ne pas monopoliser des ressources. Ainsi, de façon préférée, le procédé selon l'invention comporte, au cours de l'exécution des traitements par lot, une étape de modification du plan d'ordonnancement de façon à générer un plan d'ordonnancement affiné.

En outre, comme présenté à la figure 7, le procédé selon l'invention peut comprendre une étape 830 d'analyse du plan d'ordonnancement de façon à déterminer si celui est complet. C'est-à-dire si le plan d'ordonnancement en cours d'exécution prend en compte tous les traitements par lots à exécuter. En effet, il est possible lors de l'étape 600 de générer un plan d'ordonnancent partiel de façon à gagner en rapidité d'exécution et d'initiation des traitements par lot. Si tous les traitements par lots ont été pris en considération et que leur exécution est terminée (OK), alors le procédé comporte une étape 690 de génération d'un rapport sur l'exécution des traitements par lot et une étape 695 de génération d'une alerte sur la fin d'exécution. Ensuite, il comprend une étape 900 de mémorisation des valeurs mesurées de paramètres de comportement des traitements par lot et de mise à jour des modèles de comportement de traitement par lot et des modèles d'auto-adaptation.

Si cela n'est pas le cas (NOK), alors le procédé comporte une étape 810 de chargement d'un modèle d'auto-adaptation. Ensuite, il comprend une étape 840 de chargement des profils temporels générés lors de l'étape 500.

Le procédé comporte alors une étape 850 de conception d'un plan d'ordonnancement postérieur, en fonction du modèle d'auto-adaptation et à partir des profils temporels des traitements par lot et des valeurs mesurées de comportement de traitement par lot, de préférence pendant la période directement antérieure et dans le respect des règles d'exécution mémorisées dans le référentiel règlementaire et des données de ressources mémorisées dans le référentiel ressource. Ce plan d'ordonnancement concerne une nouvelle période. Il peut intégrer tous les traitements par lots restant à planifier ou bien seulement une partie.

Cette étape 850 peut alors comprendre la conception d'un nouveau plan d'ordonnancent pour les traitements par lots restant à exécuter. Cette nouvelle conception va avantageusement se baser sur les valeurs mesurées de paramètre de comportement des traitements par lot ayant été exécutés lors de l'étape 650 de mise en oeuvre.

Ainsi, le procédé permet une modification dynamique via un mécanisme d'auto adaptation du plan d'ordonnancement soit suite à un changement de comportement des traitements par lots soit car le plan d'ordonnancement initialement généré ne concerné qu'une partie des traitements par lot à exécuter (plan d'ordonnancement partiel).

En outre, le procédé de planification selon l'invention peut en outre comporter au préalable :
- une étape de mémorisation, par le référentiel ressources, d'une empreinte de chaque traitement par lot pour chaque machine impactée par le traitement par lot, et
- une étape de mémorisation, par le référentiel réglementaire, de règles d'exécution des traitements par lot.

Le procédé de planification selon l'invention peut également comporter une étape de modification de ces informations.

Le procédé selon l'invention peut comporter également une **étape 150 d'acquisition d'une empreinte** de chaque traitement par lots pour chaque machine impactée par le traitement par lots. Cette étape peut être réalisée par un référentiel ressources 11 qui sera présenté par la suite.

Lors de cette étape, l'empreinte à vide est mesurée pour chaque traitement par lots. Cette mesure est réalisée lorsqu'aucune action utilisateur n'a lieu de façon à identifier au mieux la consommation en ressources induite par chacun des traitements par lots et/ou la totalité des ressources disponibles. Ainsi, l'empreinte est avantageusement mesurée pour chaque traitement par lots, un à un.

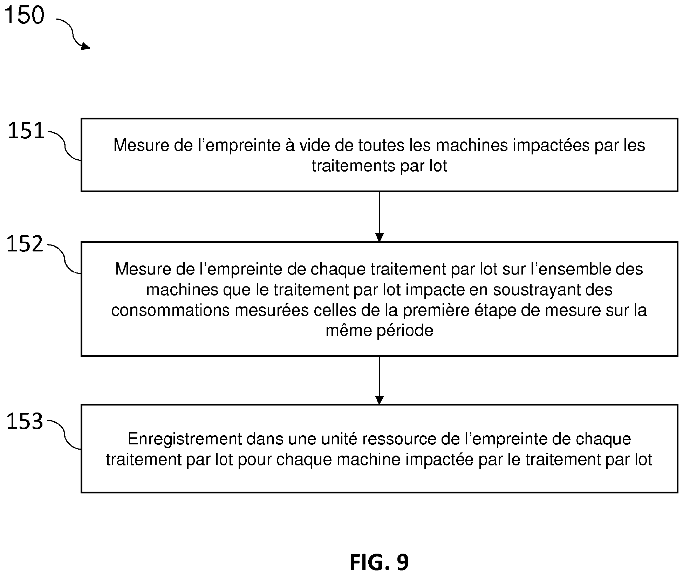

Un mode de réalisation de cette étape est notamment illustré à la **Figure 9**. Dans ce mode de réalisation, l'étape 150 d'acquisition d'une empreinte de chaque traitement par lots pour chaque machine impactée par le traitement par lots, comporte les sous-étapes suivantes :
- une étape 151 de mesure de l'empreinte à vide de toutes les machines impactées par les traitements par lot,
- une étape 152 de mesure de l'empreinte de chaque traitement par lots sur l'ensemble des machines que le traitement par lots impacte en soustrayant des consommations mesurées celles de la première étape de mesure, et
- une étape 153 d'enregistrement dans un référentiel ressources 11 de l'empreinte de chaque traitement par lots pour chaque machine impactée par le traitement par lots.

L'empreinte de chaque traitement est ainsi mesurée de façon identique à la mesure de l'empreinte à vide, et en exécutant les traitements un à un, de façon séquentielle. De telles consommations en ressources peuvent être mémorisées dans au moins un tableau matriciel mémorisé correspondant à chaque traitement Ti appliqué sur une ou plusieurs ressources d'une machine MJ, dont le nombre de ressource défini une dimension du tableau matriciel, le nombre de plages horaires affectées définissant une autre dimension du tableau matriciel, et les pourcentages d'utilisation de la ressource constituant le coefficient d'une ligne ou colonne supplémentaire. Ces informations peuvent, de préférence, se retranscrire sous la forme d'une matrice Mj machine mémorisée dans une mémoire, chaque ligne de la matrice machine Mj représentant une ressource de la machine (CPU, RAM, ....etc.), chaque colonne de la matrice une plage horaire et chaque valeur présente dans une case de la ligne d'une ressource représentant la consommation de cette ressource pour la période horaire définie pour la colonne.

Le procédé peut également comporter une étape de mémorisation de règles d'exécution et de niveaux de consommations attendus. Cette étape consiste notamment à enregistrer des règles d'exécution applicables lors de l'exécution de l'ordonnancement des traitements par lots. Ainsi, un utilisateur aura la possibilité lors de cette étape d'enregistrer sur une mémoire des règles d'exécution que l'ordonnancement créé devra respecter. Elle peut être réalisée par un référentiel réglementaire 12 qui sera présentée par la suite.

Les règles peuvent par exemple porter sur des ordres d'enchainement à respecter (e.g. le traitement A doit s'exécuter avant le traitement B), des horaires à respecter (e.g. le traitement C doit démarrer avant 23h ou le traitement D doit être terminé avant 2h), des seuils de consommation en ressources à respecter (e.g. la consommation de la ressource 1.1.1 ne peut dépasser 80 %), des etc.

De telles règles peuvent être mémorisées dans au moins un tableau matriciel mémorisé correspondant à chaque traitement Ti. Par exemple, afin d'éviter l'exécution simultanée, ou chevauchement, de deux traitements par lots, une ligne peut être ajoutée à chaque matrice de traitement, ladite ligne ne contenant plus la consommation d'une ressource pour les plages horaires mais une valeur identique (par exemple 99) dans la première colonne pour les deux ou plusieurs traitements concernés. Cela permet d'indiquer au module de construction de plan que par exemple, le chevauchement des traitements T1 et T2 est interdit.

Selon cet exemple, le module de construction de plan d'exécution, déduira que les deux traitements ne peuvent s'exécuter simultanément car ils possèdent une troisième ligne identique au sein de leurs matrices traitement respectives. Il en serait de même si plusieurs matrice Ti,... Ti+n étaient construites avec la même ligne supplémentaire. Ainsi il est possible, par le choix des valeurs introduites dans les lignes des matrices, de décaler l'exécution d'un traitement après un autre, le faire démarrer à une plage horaire précise, le faire se terminer avant une autre plage horaire. L'ensemble des matrices Ti ainsi constituées forment l'unité réglementaire 30.

Ainsi le procédé peut reposer sur autant de matrices que de traitements Ti et de machines Mj appartenant à l'infrastructure informatique sur lesquelles s'exécuteront les traitements selon les règles ainsi définies. Par l'utilisation des matrices de traitements Ti et des matrices machines Mj sur lesquelles s'exécuteront les traitements le programme va pouvoir construire un plan d'exécution.

Cette étape comporte également avantageusement une mémorisation des niveaux de consommations attendus. Une telle mémorisation peut également être réalisée par l'intermédiaire de tableaux matriciels comportant pour chaque machine Mj un seuil prédéterminé d'utilisation maximum définissant la consommation maximale attendue lors de l'exécution des traitements par lots pour chacune des ressources de chaque machines composant l'infrastructure informatique.

Le procédé selon l'invention peut faire appel à une sonde 40 ou à une pluralité de sondes 40 notamment pour mesurer l'empreinte à vide de chaque machine. La ou les sondes permettent de collecter des données sur la consommation des ressources de l'infrastructure informatique et plus particulièrement de chaque machine la composant. Plusieurs ressources peuvent être mesurées en parallèle.

Ces mesures peuvent être réalisées à partir d'une sonde, par exemple une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collecter » en anglais) pour les applications J2EE (pour « Java Enterprise Edition » en anglais).

Ces sondes peuvent être associées à chaque paramètre (e.g. ressource) pour remonter les informations de mesure ou métriques, représentant par exemple l'état de fonctionnement des ressources et la consommation associée. Pour chaque paramètre, la ou les sondes définissent un identifiant de paramètre et une valeur de paramètre. Les valeurs des paramètres peuvent être suivies en continu ou à des intervalles configurables de façon à obtenir des informations pour chaque paramètre en fonction du temps. Ces informations peuvent être stockées dans une mémoire. Dans certains modes de réalisation, le dispositif comporte une interface homme-machine permettant de définir les sondes sur chaque machines qui remontent les métriques provenant de l'utilisation des ressources de la machine.

La **figure 10** illustre schématiquement une représentation fonctionnelle non limitative d'un mode de réalisation d'un dispositif 1 de planification auto-adaptative de l'ordonnancement des traitements par lots. Le dispositif peut notamment comprendre un logiciel pour mettre en oeuvre le procédé de planification auto-adaptative selon l'invention.

Sur la figure 10 est affiché un terminal utilisateur 2 via lequel, un utilisateur peut interagir, par l'intermédiaire d'un réseau de communication 3, avec le dispositif 1 de planification auto-adaptative de l'ordonnancement des traitements par lots selon l'invention.

Le terminal utilisateur 2 est un ordinateur, une tablette numérique, un téléphone portable, ou plus généralement tout dispositif permettant à un utilisateur d'émettre des requêtes, via un réseau de communication 3 (par exemple LAN, WLAN, ou PAN, journal d'une base de données, courriel), vers le dispositif 1 de planification auto-adaptative. A cet égard, le terminal utilisateur 2 peut être pourvu d'une application cliente permettant d'envoyer des requêtes ou des instructions au dispositif 1 de planification auto-adaptative et d'en interpréter les réponses. Cette application cliente est, par exemple, un navigateur Web FireFox ^{®}, Fennec ^{®}, Opéra ^{®}, Opéra Mobile ^{®}, Internet Explorer^{®}, Google Chrome^{®} par exemple), ou un navigateur ftp (tel que FileZilla^{®}).

L'infrastructure informatique de production 5 peut comporter une pluralité de machines. Chaque machine peut comprendre un microprocesseur, des moyens de stockage (tel qu'un disque dur qu'il soit local ou distant), et une interface de communication (par exemple une interface réseau de type Ethernet, FiberChannel, InfiniBand...). Le microprocesseur, les moyens de stockage et l'interface de communication sont avantageusement interconnectés par un bus. Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif émet ou reçoit un message, ce message est émis ou reçu par une interface de communication du dispositif.

L'infrastructure informatique de traitement 4 peut également comporter une pluralité de machines et peut avantageusement correspondre à l'infrastructure informatique de production 5.

Comme déjà mentionné le dispositif selon l'invention permet d'adapter automatiquement l'ordonnancement des traitements par lots en fonction de l'activité métier ayant produit les données à traiter. Ainsi, plus particulièrement, l'invention porte sur un dispositif de planification auto-adaptative de l'ordonnancement de traitements par lots de données générées par des applications métiers sur une infrastructure informatique de production 5.

Le dispositif 1 selon l'invention comporte un module de calcul d'impact 50, apte à définir un profil temporel pour chacun des traitement par lot en fonction de l'utilisation mesurée des ressources de l'infrastructure informatique de production 5 par les applications métiers et d'un modèle de comportement de chaque lot lors de son traitement.

Le dispositif 1 selon l'invention comporte un module de conception 60 de plan d'ordonnancement, apte à concevoir un plan d'ordonnancement optimisé à partir des profils temporels de chacun des traitement par lot et dans le respect des règles d'exécution mémorisées dans le référentiel règlementaire et des données de ressources mémorisées dans le référentiel ressources.

Le dispositif 1 selon l'invention comporte également un référentiel ressource 11 apte à mémoriser les ressources disponibles pour les traitements par lots, par exemple pour chaque machine impactée par le traitement par lot. Selon une autre particularité de l'invention, le référentiel ressource 11 comporte un agencement matériel et logiciel permettant la mesure, par des sondes, de l'empreinte à vide de toutes les machines impactées par le ou les traitements par lots et un agencement matériel et logiciel permettant la mesure, par des sondes, de l'empreinte de chaque traitement par lots sur chaque machine en terme de consommations de ressources mesurées. La mesure de la consommation en ressource de chaque traitement par lots peut par exemple être réalisée en soustrayant aux consommations mesurées les empreintes à vide sur une même période. Le référentiel ressource 11 peut également être apte à calculer de l'empreinte totale sur l'ensemble des machines que de chaque traitement par lots, puis mémoriser cette empreinte totale dans une mémoire.

Le dispositif 1 selon l'invention comporte également un référentiel réglementaire 12 apte à mémoriser des règles d'exécution des traitements par lots.

Le dispositif 1 selon l'invention comporte également un module 60 de conception de plans d'exécution, apte à construire un plan d'ordonnancement optimisé à partir des profils temporels et des informations du référentiel ressources 11 et du référentiel règlementaire 12.

Le dispositif 1 selon l'invention comporte également un catalogue 61 de plans d'exécution optimisés, apte à stocker une pluralité de plans d'exécution, lesdits plans d'exécution comportant des informations d'ordonnancement optimisé pour une période de temps donnée. Le dispositif 1 selon l'invention comporte également un module 62 de sélection du plan d'exécution optimisé à exécuter.

Le dispositif 1 selon l'invention peut comporter en outre un module d'interface 70 homme-machine (IHM), apte à intervenir par exemple dans :
- La définition pourcentages d'utilisation de chaque ressource d'une machine pour chaque traitement par lots et leur enregistrement en mémoire dans le référentiel ressources 11 ;
- La définition de règles d'exécution applicables pour chaque traitement par lots Ti et leur enregistrement dans le référentiel réglementaire 12. Les règles pouvant par exemple correspondre à des restrictions horaires sur des traitements, des limites maximales acceptables de consommations de ressources, des règles d'ordonnancement inter traitements ;
- La définition et l'enregistrement des métriques suivis par des sondes 40 sur chaque machines ainsi que les seuils d'acceptabilité associé à chaque sonde.

Le dispositif 1 selon l'invention peut comporter en outre module de communication 75 apte notamment à transmettre l'ordonnancement à l'infrastructure 4 et à réceptionner des données.

Le dispositif 1 selon l'invention peut comporter en outre module de vérification apte, une fois un plan d'exécution exécuté, à vérifier que l'ensemble des règles est respecté pour toutes les machines impliquées dans le traitement par lots et que les consommations de ressources sont bien au niveau attendu pour chaque ressource. Ce module peut également être apte à détecter une déviation d'au moins un traitement par lots.

Ces différents unités ou modules sont distincts sur la figure 7 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Ainsi, en se référant de nouveau à la figure 6, le dispositif 1, indépendant ou installé au sein d'une infrastructure informatique 4 est configuré pour gérer de façon dynamique de l'ordonnancement des traitements par lots pour une infrastructure informatique déterminée. Un dispositif et un procédé selon l'invention permettent de mettre en oeuvre des ordonnancements plus performants et plus adaptés que ceux pouvant être réalisés jusqu'à présent.

En effet, le procédé de planification auto-adaptative selon l'invention est simple à mettre en oeuvre. Il permet de prendre en considération la saisonnalité des activités métier tout en réduisant le risque de dysfonctionnement pouvant résulter de sa mise en oeuvre sur des structures informatiques en production.

Tous ces avantages contribuent donc à améliorer la performance de la gestion des traitements par lots et à réduire les risques les coûts de gestion des infrastructures informatiques d'une entreprise.

## Revendications

1. Procédé de planification auto-adaptative de l'ordonnancement de traitements par lot, lesdits traitements par lots étant configurés pour traiter des données générées lors d'activités métier sur une infrastructure informatique de production (5), ledit procédé étant mis en oeuvre par un dispositif (1) associé à un référentiel ressource (11) apte à mémoriser les ressources disponibles pour les traitements par lots sur une infrastructure informatique de traitement (4) et à un référentiel réglementaire (12) apte à mémoriser des règles d'exécution des traitements par lots, ledit procédé comprenant :
- une étape de mesure (400), par des sondes (40), de paramètres d'activités métier sur l'infrastructure informatique de production (5),
- une étape de définition (500), par un module de calcul d'impact (50), d'un profil temporel pour chacun des traitements par lot en fonction des valeurs de paramètres d'activités métier mesurées et d'un modèle de comportement de traitement par lot, et
- une étape de conception (600), par un module de conception (60) de plan d'ordonnancement, d'un plan d'ordonnancement optimisant les ressources à partir des profils temporels des traitements par lot et dans le respect des règles d'exécution mémorisées dans le référentiel règlementaire (12) et des données de ressources mémorisées dans le référentiel ressources (11)
- une étape (650) de mise en oeuvre du plan d'ordonnancement optimisé,
- une étape (660) de mesure de paramètres de comportement des traitements par lot,
- une étape de détection (700) d'une déviation dans l'exécution des traitements par lot, et
- en cas de détection d'une déviation pour un ou plusieurs traitements par lot, ledit procédé comporte en outre une étape de génération (800) d'un plan d'ordonnancement affiné à partir d'un modèle auto-adaptatif et des valeurs mesurées de paramètres de comportement des traitements par lots mis en oeuvre.

2. Procédé de planification selon la revendication 1, **caractérisé en ce que** l'étape de définition (500) comporte en outre la prise en compte de seuils d'utilisation maximum des ressources mémorisés dans le référentiel de ressources (11).

3. Procédé de planification selon l'une des revendications 1 ou 2, **caractérisé en ce que** l'étape de conception (600) du plan d'ordonnancement comprend une modélisation de l'utilisation de chaque ressources durant une période de traitements afin de pouvoir déterminer la quantité de ressources disponibles pour les autres traitements durant la période.

4. Procédé de planification selon l'une quelconque des revendications 1 à 3, **caractérisé en ce qu'**il comprend une étape préalable de définition (200) d'un modèle de comportement de traitements par lot comportant les sous étapes de :
- chargement (220) de valeurs de paramètres d'activités métier, de préférence mesurées sur l'infrastructure informatique de production (5) lors de la génération des données à traiter,
- chargement (240) de valeurs de paramètres de comportement de traitements par lot, de préférence mesurées sur l'infrastructure informatique de traitement (4) lors du traitement des données générées par des applications métiers, et
- génération (250), par un module de modélisation (20), d'un modèle de comportement des traitements par lot à partir des valeurs de paramètres d'activités métier et valeurs de paramètres de comportement.

5. Procédé de planification selon l'une quelconque des revendications 1 à 4, **caractérisé en ce qu'**il comprend une étape préalable de définition (300) d'un modèle d'auto-adaptation comportant les sous étapes de :
- chargement (320) de valeurs de paramètre de comportement d'un premier traitement par lot lors du traitement des données générées par des applications métiers,
- chargement (340) de valeurs de paramètres de comportement d'au moins un autre traitement par lot lors du traitement des données générées par des applications métiers,
- génération (350), par un module de modélisation (20), d'un modèle d'autoadaptation à partir des valeurs de paramètres de comportement chargés.

6. Procédé de planification selon l'une quelconque des revendications 1 à 5, **caractérisé en ce qu'**il comprend une étape d'enregistrement des plans d'ordonnancement optimisant les ressources dans un catalogue (61) de plans d'ordonnancement et une étape de sélection (550) d'un plan d'ordonnancement adapté.

7. Procédé de planification selon l'une des revendications 1 à 6, **caractérisé en ce que** l'étape de détection (700) d'une déviation, comporte une mesure d'un paramètre de comportement d'un traitement par lot à un instant t, et une comparaison de la valeur du paramètre de comportement mesuré à une valeur du paramètre de comportement attendue, la présence d'un écart étant indicatrice d'une déviation.

8. Procédé de planification selon l'une des revendications 1 à 7, **caractérisé en ce que** l'étape de génération (800) comporte en outre la génération d'un profil temporel affiné.

9. Procédé de planification selon l'une des revendications 1 à 8, **caractérisé en ce que** l'étape de génération (800) comporte en outre la génération d'un modèle de comportement affiné et/ou la modification du modèle auto-adaptatif.

10. Procédé de planification selon l'une quelconque des revendications 1 à 9, **caractérisé en ce que** la conception de plan d'ordonnancement optimisé (600, 850) concerne seulement une partie des traitements par lot devant être exécutés sur une période pour traiter les données générées lors des activités métier.

11. Procédé de planification selon la revendication 10, **caractérisé en ce qu'**il comporte une étape (850) de conception d'un plan d'ordonnancement postérieur, pour une nouvelle période, en fonction d'un modèle d'auto-adaptation et à partir des profils temporels des traitements par lot, de valeurs mesurées de comportement de traitement par lot pendant une période antérieure et dans le respect des règles d'exécution mémorisées dans le référentiel règlementaire et des données de ressources mémorisées dans le référentiel ressource.

12. Procédé de planification selon l'une quelconque des revendications 1 à 11, **caractérisé en ce qu'**il comprend en outre une étape de mémorisation (900) des valeurs mesurées de paramètres de comportement des traitements par lot et de mise à jour des modèles de comportement de traitement par lot et des modèles d'auto-adaptation.

13. Dispositif (1) de planification auto-adaptative de l'ordonnancement de traitements par lots de données générées par des activités métier sur une infrastructure informatique de production (5), ledit dispositif étant associé à un référentiel ressource (11) apte à mémoriser des données de ressources disponibles pour les traitements par lots, à un référentiel réglementaire (12) apte à mémoriser des règles d'exécution des traitements par lots, et à des sondes (40), configurées pour mesurer une valeur de paramètre d'activités métier sur l'infrastructure informatique de production (5) par les applications métiers, ledit dispositif comprenant un module de calcul d'impact (50), apte à définir un profil temporel pour chacun des traitement par lot en fonction des valeurs mesurées de paramètre d'activité métier et d'un modèle de comportement de traitement par lot, et un module de conception (60) de plan d'ordonnancement, apte à concevoir un plan d'ordonnancement optimisant l'utilisation des ressources à partir des profils temporels de chacun des traitements par lot et dans le respect des règles d'exécution mémorisées dans le référentiel règlementaire (12) et des données de ressources mémorisées dans le référentiel ressources (11), le dispositif (1) étant en outre configuré pour mettre en oeuvre le plan d'ordonnancement optimisé, pour mesurer des paramètres de comportement des traitements par lot, pour détecter une déviation dans l'exécution des traitements par lot et pour générer un plan d'ordonnancement affiné à partir d'un modèle d'auto-adaptation et des valeurs mesurées de paramètres de comportement des traitements par lots mis en oeuvre, en cas de détection d'une déviation pour un ou plusieurs traitements par lot.

## Patentansprüche

1. Verfahren zum selbstanpassenden Planen der Ablaufsteuerung von Batch-Verarbeitungen, wobei die Batch-Verarbeitungen zum Verarbeiten von Daten konfiguriert sind, die bei Geschäftstätigkeiten auf einer Produktionscomputerinfrastruktur (5) erzeugt werden, wobei das Verfahren durch eine Vorrichtung (1) implementiert wird, die mit einem Ressourcen-Repository (11), das geeignet ist, um die Ressourcen, die für die Batch-Verarbeitungen verfügbar sind, auf einer Computerverarbeitungsinfrastruktur (4) zu speichern, und mit einem Regulierungs-Repository (12) verknüpft ist, das geeignet ist, um Ausführungsregeln der Batch-Verarbeitungen zu speichern, das Verfahren umfassend:
- einen Schritt (400) zum Messen, durch Sonden (40), von Geschäftstätigkeitsparametern auf der Produktionscomputerinfrastruktur (5),
- einen Schritt (500) zum Definieren, durch ein Auswirkungsberechnungsmodul (50), eines zeitlichen Profils für jede der Batch-Verarbeitungen in Abhängigkeit von den Werten der gemessenen Geschäftstätigkeitsparameter und einem Batch-Verarbeitungsverhaltensmodell, und
- einen Schritt (600) zum Entwerfen, durch ein Ablaufsteuerungsplanentwurfsmodul (60), eines Ablaufsteuerungsplans, der die Ressourcen optimiert, aus den zeitlichen Profilen der Batch-Verarbeitungen und in Übereinstimmung mit den Ausführungsregeln, die in dem Regulierungs-Repository (12) gespeichert sind, und den Ressourcendaten, die in dem Ressourcen-Repository (11) gespeichert sind
- einen Schritt (650) zum Implementieren des optimierten Ablaufsteuerungsplans,
- einen Schritt (660) zum Messen von Batch-Verarbeitungsverhaltensparametern,
- einen Schritt zum Erkennen (700) einer Abweichung in der Ausführung der Batch-Verarbeitungen, und
- im Falle des Erkennens einer Abweichung für eine oder mehrere Batch-Verarbeitungen, wobei das Verfahren ferner einen Schritt (800) zum Erzeugen eines verfeinerten Ablaufsteuerungsplans aus einem selbstanpassenden Modell und den gemessenen Werten der Verhaltensparameter der implementierten Batch-Verarbeitungen aufweist.

2. Planungsverfahren nach Anspruch 1, **dadurch gekennzeichnet, dass** der Definitionsschritt (500) ferner die Berücksichtigung von Schwellenwerten einer maximalen Nutzung der Ressourcen aufweist, die in dem Ressourcen-Repository (11) gespeichert sind.

3. Planungsverfahren nach einem der Ansprüche 1 oder 2,
**dadurch gekennzeichnet, dass** der Entwurfsschritt (600) des Ablaufsteuerungsplans eine Modellierung der Nutzung jeder Ressource während eines Verarbeitungszeitraums umfasst, um die Menge an verfügbaren Ressourcen für die anderen Verarbeitungen während des Zeitraums bestimmen zu können.

4. Planungsverfahren nach einem der Ansprüche 1 bis 3,
**dadurch gekennzeichnet, dass** es einen vorläufigen Schritt (200) zum Definieren eines Batch-Verarbeitungsverhaltensmodells umfasst, das die Unterschritte aufweist:
- Laden (220) von Werten von Geschäftstätigkeitsparametern, die vorzugsweise auf der Produktionscomputerinfrastruktur (5) bei dem Erzeugen der zu verarbeitenden Daten gemessen werden,
- Laden (240) von Werten von Batch-Verarbeitungsverhaltensparametern, die vorzugsweise auf der Computerinfrastruktur (4) bei dem Verarbeiten der Daten gemessen werden, die durch die Geschäftsanwendungen erzeugt werden, und
- Erzeugen (250), durch ein Modellierungsmodul (20), eines Batch-Verarbeitungsverhaltensmodells aus den Werten von Geschäftstätigkeitsparametern und Werten von Verhaltensparametern.

5. Planungsverfahren nach einem der Ansprüche 1 bis 4,
**dadurch gekennzeichnet, dass** es einen vorläufigen Schritt (300) zum Definieren eines Selbstanpassungsmodells umfasst, das die Unterschritte aufweist:
- Laden (320) von Werten von Verhaltensparametern einer ersten Batch-Verarbeitung bei dem Verarbeiten von Daten, die durch Geschäftsanwendungen erzeugt werden,
- Laden (340) von Werten von Verhaltensparametern von mindestens einer anderen Batch-Verarbeitung bei dem Verarbeiten von Daten, die durch Geschäftsanwendungen erzeugt werden,
- Erzeugen (350), durch ein Modellierungsmodul (20), eines Selbstanpassungsmodells aus den Werten von geladenen Verhaltensparametern.

6. Planungsverfahren nach einem der Ansprüche 1 bis 5,
**dadurch gekennzeichnet, dass** es einen Schritt zum Abspeichern von Ablaufsteuerungsplänen, die die Ressourcen optimieren, in einem Katalog (61) von Ablaufsteuerungsplänen und einen Schritt (550) zum Auswählen eines angepassten Ablaufsteuerungsplans umfasst.

7. Planungsverfahren nach einem der Ansprüche 1 bis 6,
**dadurch gekennzeichnet, dass** der Schritt (700) zum Erkennen einer Abweichung eine Messung eines Verhaltensparameters einer Batch-Verarbeitung zu einem Zeitpunkt t und einen Vergleich des Wertes des gemessenen Verhaltensparameters mit einem Wert des erwarteten Verhaltensparameters umfasst, wobei das Vorhandensein einer Differenz auf eine Abweichung hinweist.

8. Planungsverfahren nach einem der Ansprüche 1 bis 7,
**dadurch gekennzeichnet, dass** der Erzeugungsschritt (800) ferner das Erzeugen eines verfeinerten zeitlichen Profils aufweist.

9. Planungsverfahren nach einem der Ansprüche 1 bis 8,
**dadurch gekennzeichnet, dass** der Erzeugungsschritt (800) ferner das Erzeugen eines verfeinerten Verhaltensmodells und/oder das Modifizieren des selbstanpassenden Modells aufweist.

10. Planungsverfahren nach einem der Ansprüche 1 bis 9,
**dadurch gekennzeichnet, dass** das Entwerfen des optimierten Ablaufsteuerungsplans (600, 850) nur einen Teil der Batch-Verarbeitungen betrifft, die über einen Zeitraum zum Verarbeiten der Daten ausgeführt werden müssen, die bei den Geschäftstätigkeiten erzeugt werden.

11. Planungsverfahren nach Anspruch 10, **dadurch gekennzeichnet, dass** es einen Schritt (850) zum Entwerfen eines nachfolgenden Ablaufsteuerungsplans, für einen neuen Zeitraum, in Abhängigkeit von einem Selbstanpassungsmodell und aus den zeitlichen Profilen der Batch-Verarbeitungen, gemessenen Werten eines Batch-Verarbeitungsverhaltens während eines früheren Zeitraums und in Übereinstimmung mit den Ausführungsregeln, die in dem Regulierungs-Repository gespeichert sind, und den Ressourcendaten aufweist, die in dem Ressourcen-Repository gespeichert sind.

12. Planungsverfahren nach einem der Ansprüche 1 bis 11,
**dadurch gekennzeichnet, dass** es ferner einen Schritt (900) zum Speichern der gemessenen Werte von Batch-Verarbeitungsverhaltensparametern und zum Aktualisieren von Batch-Verarbeitungsverhaltensmodellen und Selbstanpassungsmodellen umfasst.

13. Vorrichtung (1) zum selbstanpassenden Planen der Ablaufsteuerung von Batch-Verarbeitungen von Daten, die durch Geschäftstätigkeiten auf einer Produktionscomputerinfrastruktur (5) erzeugt werden, wobei die Vorrichtung mit einem Ressourcen-Repository (11), das geeignet ist, um Daten von Ressourcen zu speichern, die für die Batch-Verarbeitungen verfügbar sind, mit einem Regulierungs-Repository (12), das geeignet ist, um Ausführungsregeln für die Batch-Verarbeitungen zu speichern, und mit Sonden (40) verknüpft ist, die zum Messen eines Werts des Geschäftstätigkeitsparameters in der Produktionscomputerinfrastruktur (5) durch die Geschäftsanwendungen konfiguriert ist, die Vorrichtung umfassend ein Auswirkungsberechnungsmodul (50), das geeignet ist, um ein zeitliches Profil für jede der Batch-Verarbeitungen in Abhängigkeit von den gemessenen Werten des Geschäftstätigkeitsparameters und eines Batch-Verarbeitungsverhaltensmodells zu definieren, und ein Ablaufsteuerungsplanentwurfsmodul (60), das geeignet ist, um einen Ablaufsteuerungsplan, der die Nutzung von Ressourcen optimiert, aus den zeitlichen Profilen jeder der Batch-Verarbeitungen und in Übereinstimmung mit den Ausführungsregeln, die in dem Regulierungs-Repository (12) gespeichert sind, und den Ressourcendaten zu entwerfen, die in dem Ressourcen-Repository (11) gespeichert sind, wobei die Vorrichtung (1) ferner zum Implementieren des optimierten Ablaufsteuerungsplans, zum Messen der Batch-Verarbeitungsverhaltensparameter, zum Erkennen einer Abweichung in der Ausführung der Batch-Verarbeitungen und zum Erzeugen eines verfeinerten Ablaufsteuerungsplans aus einem Selbstanpassungsmodell und gemessenen Werten von Batch-Verarbeitungsverhaltensparametern konfiguriert ist, im Falle des Erkennens einer Abweichung für eine oder mehrere Batch-Verarbeitungen.

## Claims

1. Method of self-adaptive planning for the scheduling of batch processing, said batch processes being configured to process data generated during business activities on a production computing infrastructure (5), said method being implemented by a device (1) which is associated with a resource repository (11) which is capable of storing the resources available for the batch processes on a processing computing infrastructure (4) and with a regulatory repository (12) which is capable of storing rules for executing batch processes, said method comprising:
- a step (400) of measuring, by means of probes (40), business activity parameters on the production computing infrastructure (5),
- a step (500) of defining, by an impact calculation module (50), a time profile for each of the batch processes according to the measured business activity parameter values and a batch processing behavior model, and
- a step (600) of designing, by means of a scheduling plan design module (60), a scheduling plan optimizing the resources on the basis of time profiles of the batch processes and in compliance with execution rules which are stored in the regulatory repository (12) and resource data which are stored in the resource repository (11),
- a step (650) of implementing the optimized scheduling plan,
- a step (660) of measuring batch processing behavior parameters,
- a step (700) of detecting a deviation in the execution of the batch processes, and
- if a deviation is detected for one or more batch processes, said method further comprises a step (800) of generating a refined scheduling plan from a self-adaptive model and measured values of behavior parameters of the implemented batch processes.

2. Planning method according to claim 1, **characterized in that** the definition step (500) further comprises taking into account maximum resource usage thresholds which are stored in the resource repository (11).

3. Planning method according to one of claims 1 or 2, **characterized in that** the step (600) of designing the scheduling plan comprises a modeling of the use of each resource during a processing period in order to be able to determine the amount of resources available for the other processes during the period.

4. Planning method according to any one of claims 1 to 3,
**characterized in that** it comprises a preliminary step (200) of defining a model of batch processing behavior, comprising the sub-steps of:
- loading (220) of business activity parameter values, preferably measured on the production computing infrastructure (5) when generating the data to be processed,
- loading (240) of batch processing behavior parameter values, preferably measured on the processing computing infrastructure (4) when processing data generated by business applications, and
- generating (250), by means of a modeling module (20), a behavior model of the batch processes from business activity parameter values and behavior parameter values.

5. Planning method according to any one of claims 1 to 4,
**characterized in that** it comprises a preliminary step (300) of defining a self-adaptation model, comprising the sub-steps of:
- loading (320) of behavior parameter values from a first batch process when processing data generated by business applications,
- loading (340) of behavior parameter values from at least one other batch process when processing data generated by business applications,
- generating (350), by means of a modeling module (20), a self-adaptation model from the loaded behavior parameter values.

6. Planning method according to any one of claims 1 to 5,
**characterized in that** it comprises a step of registering resource-optimizing scheduling plans in a scheduling plan catalog (61) and a step (550) of selecting a suitable scheduling plan.

7. Planning method according to one of claims 1 to 6, **characterized in that** the deviation detection step (700) comprises measuring a behavior parameter of a batch process at a time t, and comparing the measured behavior parameter value with an expected behavior parameter value, the presence of a difference being indicative of a deviation.

8. Planning method according to one of claims 1 to 7, **characterized in that** the generation step (800) further comprises the generation of a refined time profile.

9. Planning method according to one of claims 1 to 8, **characterized in that** the generation step (800) further comprises the generation of a refined behavior model and/or the modification of the self-adaptive model.

10. Planning method according to any one of claims 1 to 9,
**characterized in that** the optimized scheduling plan design (600, 850) relates only to a portion of the batch processes to be executed over a period of time to process the data generated during business activities.

11. Planning method according to claim 10, **characterized in that** it comprises a step (850) of designing a subsequent scheduling plan, for a new period, according to a self-adaptation model and on the basis of time profiles of the batch processes, measured values of batch processing behavior during a previous period and in compliance with execution rules which are stored in the regulatory repository and resource data which are stored in the resource repository.

12. Planning method according to any one of claims 1 to 11,
**characterized in that** it further comprises a step (900) of storing the measured behavior parameter values of the batch processes and updating batch processing behavior models and self-adaptation models.

13. Device (1) for self-adaptive planning of the scheduling of batch processing of data generated by business activities on a production computing infrastructure (5), said device being associated with a resource repository (11) capable of storing data on resources available for the batch processes, with a regulatory repository (12) capable of storing rules for executing the batch processes, and with probes (40) which are configured to measure a parameter value of business activities on the production computing infrastructure (5) by the business applications, said device comprising an impact calculation module (50) which is capable of defining a time profile for each of the batch processes according to the measured business activity parameter values and a batch processing behavior model, and a scheduling plan design module (60) which is capable of designing a scheduling plan optimizing resource usage on the basis of the time profiles of each of the batch processes and in compliance with the execution rules stored in the regulatory repository (12) and the resource data stored in the resource repository (11), the device (1) being further configured to implement the optimized scheduling plan, to measure behavior parameters of the batch processes, to detect a deviation in the execution of the batch processes and to generate a refined scheduling plan from a self-adaptation model and the measured values of behavior parameters of the implemented batch processes, in the event of a deviation being detected for one or more batch processes.
